# FASCICULE DE BREVET EUROPEEN

(11) **EP 2 307 687 B1**
(45) Date de publication et mention de la délivrance du brevet: **23.05.2012**
(21) Numéro de dépôt: 09784235.5
(22) Date de dépôt: 26.06.2009
(51) Int. Cl.: F02B 75/04, F02B 75/32, F01B 9/04, F02D 15/02, F16K 11/056, F16K 11/10, F16K 15/18, F16K 31/124

(54) **DISPOSITIF DE REGLAGE DU TAUX DE COMPRESSION A LEVEE DE BILLE POUR MOTEUR A TAUX DE COMPRESSION VARIABLE**
KUGELHUBVORRICHTUNG ZUR EINSTELLUNG DES VERDICHTUNGSVERHÄLTNISSES FÜR EINEN MOTOR MIT VERÄNDERLICHEM VERDICHTUNGSVERHÄLTNIS
BALL LIFT DEVICE FOR ADJUSTING THE COMPRESSION RATIO OF A VARIABLE COMPRESSION RATIO ENGINE

(30) Priorité: 26.06.2008 FR 0803589; 27.06.2008 US 76372
(43) Date de publication de la demande: 13.04.2011
(73) Titulaire: Rabhi, Vianney, 69006 Lyon (FR)
(72) Inventeur: Rabhi, Vianney, 69006 Lyon (FR)
(74) Mandataire: Schmitt, John
(86) Numéro de dépôt international: PCT/FR2009/000795
(87) Numéro de publication internationale: WO 2010/004123

(56) Documents cités:
- DE-A1-102005 010 098
- DE-C1- 3 825 369
- FR-A- 997 725
- FR-A- 2 896 539
- GB-A- 2 395 767
- JP-A- 63 105 244

## Description

La présente invention a pour objet un dispositif de réglage du taux de compression à levée de bille pour moteur à taux de compression variable comprenant au moins une bille ou clapet reposant sur un siège pour obturer au moins un conduit reliant la chambre supérieure et inférieure d'un vérin de commande, ladite bille ou clapet fonctionnant comme un clapet anti-retour lorsqu'elle est maintenue sur son siège par un ressort pour ne laisser passer un fluide hydraulique que dans un sens, et pouvant être soulevée de son siège par des moyens de levage pour laisser passer le fluide hydraulique dans les deux sens.

On connaît, d'après les brevets internationaux WO98/51911, WO00/31377, WO03/008783 appartenant au demandeur, différents dispositifs mécaniques pour moteur à cylindrée variable.

On remarque que le brevet international WO98/51911 au nom du demandeur décrit un dispositif servant à améliorer le rendement des moteurs à combustion interne à pistons utilisés à charge et régime variables par adaptation en marche de leur cylindrée effective et/ou de leur rapport volumétrique. Ce type de moteur étant connu de l'homme de l'art sous la dénomination de « moteur à taux de compression variable », cette dénomination sera retenue dans le texte qui suit.

On constate que selon le brevet international WO00/31377 au nom du demandeur, le dispositif de transmission mécanique pour moteur à taux de compression variable comprend un piston de combustion, solidaire dans sa partie inférieure d'un organe de transmission coopérant d'une part avec un dispositif de guidage à roulement, et d'autre part avec une roue dentée solidaire d'une bielle permettant de réaliser la transmission du mouvement entre ledit piston et ladite bielle.

On note que selon le brevet international WO03/008783 au nom du demandeur le dispositif de transmission mécanique pour moteur à taux de compression variable comprend au moins un cylindre dans lequel se déplace un piston de combustion qui est solidaire, dans sa partie inférieure, d'un organe de transmission dit aussi « crémaillère de piston » coopérant d'une part au moyen d'une crémaillère de faible dimension avec un dispositif de guidage à roulement, et d'autre part au moyen d'une autre crémaillère de forte dimension avec une roue dentée solidaire d'une bielle. Ledit dispositif de transmission mécanique pour moteur à taux de compression variable comprend également au moins une crémaillère de commande coopérant avec la roue dentée, des moyens de fixation du piston de combustion sur l'organe de transmission qui offrent une précontrainte de serrage, des moyens de liaison qui permettent de rigidifier les dents des crémaillères, et des moyens de renforcement et d'allègement de la structure de la roue dentée.

On note que le jeu minimal de fonctionnement entre les dentures des crémaillères de forte dimension et celles de la roue dentée est fixé par la localisation de surfaces de roulement réalisées sur lesdites crémaillères de forte dimension et sur ladite roue dentée.

On remarque que selon la demande de brevet FR 2 896 544 le moteur à taux de compression variable comprend une culasse commune qui coopère avec un carter cylindre pour fermer d'une part l'extrémité d'au moins un cylindre du moteur au niveau de sa chambre de combustion, et d'autre part l'extrémité d'au moins un cylindre d'un vérin de commande dudit moteur au niveau de la chambre supérieure dudit vérin, ledit carter cylindre contenant l'ensemble des composants de l'attelage mobile du moteur à taux de compression variable.

On note que selon la demande de brevet FR 2 896 539 ou WO2007/085739 le moteur à taux de compression variable possède au moins un vérin presseur qui permet aux surfaces de roulement de rester en permanence en contact entre elles afin de maîtriser les émissions acoustiques dudit moteur et d'augmenter les tolérances de fabrication de son carter cylindre, ledit moteur à taux de compression variable possédant autant de vérins presseurs et de vérins de commande qu'il possède de cylindres.

On note également que selon les brevets WO98/51911 et FR 2 896 539, la position verticale de la crémaillère de commande du moteur à taux de compression variable est contrôlée par un vérin de commande qui comporte une entrée de fluide hydraulique sous pression prévue pour compenser d'éventuelles fuites dudit vérin de commande, et pour assurer une pression de pré charge visant à augmenter la précision de maintien de la consigne en position verticale dudit vérin de commande en réduisant les effets de la compressibilité de l'huile, et visant à éviter tout phénomène de cavitation à l'intérieur des chambres dudit vérin.

On remarque dans le brevet international WO98/51911 que le vérin de commande comporte une chambre inférieure et une chambre supérieure dont la cylindrée est maintenue identique à celle de ladite chambre inférieure grâce à un prolongateur d'axe de vérin également appelé « tige supérieure de vérin ». Toujours selon brevet international WO98/51911, le vérin de commande comprend également un piston de vérin, des valves maintenues en place par des ressorts, et une tige de contrôle, l'extrémité supérieure dudit vérin étant fermée par une culasse qui comporte des moyens d'étanchéité entre ladite culasse et ladite tige supérieure de vérin d'une part et entre ladite culasse et ladite tige de contrôle d'autre part.

Comme revendiqué dans les demandes de brevet français FR 2 896 539 et FR 07/05237 au nom du demandeur, le moteur à taux de compression variable comporte une centrale hydraulique prévue d'une part, pour fournir à son ou ses vérin(s) presseur(s) la pression hydraulique nécessaire à leur fonctionnement, et d'autre part, pour fournir à son ou ses vérin(s) de commande la pression hydraulique nécessaire à la compensation de leurs éventuelles fuites hydrauliques et à l'augmentation de leur précision. On note que ladite centrale est alimentée en huile par le circuit de lubrification du moteur à taux de compression variable, via une pompe haute pression pouvant être entraînée par l'un quelconque des arbres à cames dudit moteur à taux de compression variable, ladite centrale alimentant ensuite le ou les vérin(s) de commande et le ou les vérin(s) presseur(s) dudit moteur.

On remarque, selon la demande de brevet français FR 2 896 539 ou WO2007/085739 au nom du demandeur, que la pression hydraulique fournie au vérin de commande peut également servir à augmenter la vitesse de déplacement dudit vérin de commande lors des manoeuvres visant à augmenter le rapport volumétrique du moteur à taux de compression variable. Selon cette dernière variante, ladite pression hydraulique est appliquée sur la face supérieure de la tige supérieure du vérin de commande au moyen d'une chambre aménagée dans la culasse dudit vérin.

On constate dans les demandes de brevets et brevets d'invention au nom du demandeur que la tige de commande peut avantageusement être remplacée par des électrovannes qui coopèrent avec au moins un capteur, de sorte à simplifier la réalisation du système de commande du taux de compression du moteur à taux de compression variable.

Le dispositif de réglage du taux de compression à levée de bille ou de clapet suivant la présente invention est conçu pour résoudre un ensemble de problèmes liés à la commande du taux de compression telle que décrite dans les divers demandes de brevets et brevet d'invention au nom du demandeur auxquels il vient d'être fait référence et parmi lesquels :
- La tige supérieure de vérin qui assure à la chambre supérieure du vérin de commande une cylindrée identique à celle de la chambre inférieure implique la réalisation d'au moins un joint d'étanchéité entre ladite chambre supérieure et la culasse du moteur à taux de compression variable. Ledit joint rend plus complexe la réalisation du moteur à taux de compression variable car il est logé dans une gorge aménagée dans la culasse, ladite gorge devant être réalisée coaxialement à la tige supérieure de vérin. Outre les difficultés liées à la précision d'usinage requise pour réaliser ladite gorge, il est difficile de garantir une bonne étanchéité audit joint à cause des possibles excentrations de la tige supérieure de vérin par rapport à la gorge. Cette difficulté résulte, d'une part, des mouvements qu'effectue ladite tige lorsque le moteur à taux de compression variable fonctionne, et d'autre part, de la dilatation de la culasse qui déplace cette dernière par rapport au carter cylindres du moteur à taux de compression variable, ces deux effets conjugués tendant bien à décentrer ladite gorge par rapport à ladite tige.
- Comme exposé au paragraphe précédent, la tige supérieure de vérin de commande pose diverses difficultés de réalisation. Cependant, elle est utile voire indispensable pour augmenter la vitesse de déplacement du vérin de commande du moteur à taux de compression variable lors des manoeuvres visant à augmenter le rapport volumétrique dudit moteur, la pression hydraulique étant alors appliquée sur la face supérieure de la tige supérieure du vérin de commande au moyen d'une chambre aménagée dans la culasse dudit vérin. En l'état actuel de la technique, supprimer ladite tige reviendrait à supprimer cette fonction, ce qui est impossible.
- Il est difficile de concevoir des électrovannes, en remplacement de la tige de contrôle, qui assurent une faible perte de charge sans consommer beaucoup d'énergie ni présenter un prix de revient trop élevé, et qui s'accommodent des impuretés et des divers polluants que contient le circuit de lubrification du moteur à taux de compression variable.

C'est pour résoudre différents problèmes liés à la commande et au contrôle du taux de compression tels que décrits dans les demandes de brevets et brevet d'invention au nom du demandeur cités en référence, et notamment ceux liés à la difficulté de réalisation et au coût de la tige supérieure de vérin et à son étanchéité avec la culasse, ainsi qu'à ceux liés à la difficulté de répondre au cahier des charges fonctionnel des électrovannes de commande qui viennent en remplacement de la tige de contrôle dans de bonnes conditions économiques, que le dispositif de réglage du taux de compression à levée de bille pour moteur à taux de compression variable suivant la présente invention propose :
- La possibilité de supprimer la tige supérieure de vérin afin de simplifier de manière significative la réalisation de la culasse du moteur à taux de compression variable ;
- La conservation de la fonction d'assistance au vérin de commande du moteur à taux de compression variable nécessaire pour augmenter la vitesse de déplacement dudit vérin lors des manoeuvres visant à augmenter le rapport volumétrique dudit moteur, malgré la suppression de la tige supérieure de vérin de commande et de la chambre aménagée dans la culasse telle que décrite dans le brevet FR 2 896 539 au nom du demandeur ;
- Le remplacement des électrovannes classiques par un dispositif de réglage robuste, durable et au prix de revient raisonnable, compatible avec les impuretés et divers polluants présents dans l'huile de lubrification du moteur à taux de compression variable.

Le dispositif de réglage du taux de compression d'un moteur à taux de compression variable comprenant un vérin de commande hydraulique à double effet comportant une chambre supérieure et une chambre inférieure et au moins un piston de vérin relié à une crémaillère de commande suivant la présente invention comprend :
- Au moins deux billes ou clapets reposant chacune sur un siège et obturant respectivement l'une et l'autre extrémité d'un canal de transfert reliant la chambre supérieure et la chambre inférieure du vérin de commande, lesdites billes agissant comme un clapet anti-retour lorsqu'elles sont maintenues sur leur siège par un ressort afin de ne laisser passer le fluide hydraulique que dans un sens ;
- Des moyens de levage permettant de soulever les billes de leur siège pour que lesdites billes laissent passer le fluide hydraulique dans les deux sens.

Le dispositif de réglage du taux de compression à levée de bille pour moteur à taux de compression variable suivant la présente invention comprend :
- Un vérin de commande dont le piston de vérin est fixé à la crémaillère de commande par une vis de serrage ;
- Et au moins un clapet anti-retour de compensation permettant au fluide hydraulique de sortir du canal de transfert pour retourner dans une centrale hydraulique du moteur à taux de compression variable contenant une réserve sous pression dudit fluide, mais interdisant audit fluide de retourner dans ledit canal de transfert.

Le dispositif de réglage du taux de compression à levée de bille pour moteur à taux de compression variable suivant la présente invention comporte des moyens de levage qui sont constitués d'un poussoir cylindrique logé dans le canal de transfert, et d'un actionneur électromécanique permettant de manoeuvrer en translation longitudinale ledit poussoir cylindrique afin que son extrémité vienne au contact puis pousse la bille de manière à ce qu'elle se lève de son siège

Le dispositif de réglage du taux de compression à levée de bille pour moteur à taux de compression variable suivant la présente invention comporte un poussoir cylindrique qui est rappelé par un ressort qui tend à l'éloigner de la bille.

Le dispositif de réglage du taux de compression à levée de bille pour moteur à taux de compression variable suivant la présente invention comporte un poussoir cylindrique qui est arrêté en translation par une butée de poussoir, ladite butée étant placée dans une direction qui est opposée à celle permettant audit poussoir cylindrique de lever la bille.

Le dispositif de réglage du taux de compression à levée de bille pour moteur à taux de compression variable suivant la présente invention comporte entre la butée de poussoir et la bille, une distance qui est réglable par l'intermédiaire d'un dispositif de réglage de la garde à la bille de sorte à permettre de régler le jeu entre le poussoir cylindrique et ladite bille lorsque ledit poussoir cylindrique est en contact avec ladite butée de poussoir.

Le dispositif de réglage du taux de compression à levée de bille pour moteur à taux de compression variable suivant la présente invention comporte un dispositif de réglage de la garde à la bille qui consiste en un filetage aménagé directement ou indirectement dans le carter cylindres du moteur à taux de compression variable et permettant de régler la position de la butée de poussoir par rapport à celle du siège de la bille, ledit filetage pouvant être arrêté en rotation par des moyens de blocage.

Le dispositif de réglage du taux de compression à levée de bille pour moteur à taux de compression variable suivant la présente invention comporte un actionneur électromécanique qui est logé à l'extérieur du canal de transfert.

Le dispositif de réglage du taux de compression à levée de bille pour moteur à taux de compression variable suivant la présente invention comporte un actionneur électromécanique qui est constitué d'au moins une ventouse électromagnétique comportant un bobinage et une cage fixée directement ou indirectement sur le carter cylindres du moteur à taux de compression variable, ledit bobinage servant à créer un champ magnétique permettant d'attirer une palette métallique de poussoir poussant le poussoir cylindrique quand ledit bobinage est traversé par un courant électrique.

Le dispositif de réglage du taux de compression à levée de bille pour moteur à taux de compression variable suivant la présente invention comporte un actionneur électromécanique qui comporte une première ventouse électromagnétique permettant de lever la bille sur une petite hauteur, et une deuxième ventouse électromagnétique permettant de lever ladite bille sur une hauteur plus élevée.

Le dispositif de réglage du taux de compression à levée de bille pour moteur à taux de compression variable suivant la présente invention comporte une première ventouse électromagnétique de l'actionneur électromécanique qui est constituée d'un bobinage et d'une cage métallique qui peut être fixée sur une palette métallique support, ladite palette métallique support pouvant se déplacer en direction de la bille mais étant arrêtée dans la direction opposée par un dispositif de réglage de deuxième ventouse solidaire directement ou indirectement du carter cylindres du moteur à taux de compression variable.

Le dispositif de réglage du taux de compression à levée de bille pour moteur à taux de compression variable suivant la présente invention comporte une deuxième ventouse électromagnétique de l'actionneur électromécanique qui est constituée d'un bobinage et d'une cage métallique fixée directement ou indirectement sur le carter cylindres du moteur à taux de compression variable, ledit bobinage servant à créer un champ magnétique de manière à attirer la palette métallique support de la première ventouse électromagnétique lorsque ledit bobinage de ladite deuxième ventouse électromagnétique est traversé par un courant électrique.

Le dispositif de réglage du taux de compression à levée de bille pour moteur à taux de compression variable suivant la présente invention comporte entre une palette métallique de poussoir solidaire ou en contact avec le poussoir cylindrique d'une part et la cage métallique de la première ventouse électromagnétique d'autre part, une distance maximale qui peut être réglée au moyen d'un dispositif de réglage de première ventouse de sorte à régler la petite hauteur de levée de la bille.

Le dispositif de réglage du taux de compression à levée de bille pour moteur à taux de compression variable suivant la présente invention comprend un dispositif de réglage de première ventouse électromagnétique qui consiste en un filetage permettant de régler la position de la butée solidaire directement ou indirectement du carter cylindres du moteur à taux de compression variable et sur laquelle prend appui la palette métallique de poussoir par rapport à la position de la cage métallique, ledit filetage pouvant être arrêté en rotation par des moyens de blocage.

Le dispositif de réglage du taux de compression à levée de bille pour moteur à taux de compression variable suivant la présente invention comporte entre la palette métallique support de la première ventouse électromagnétique et la cage métallique de la deuxième ventouse électromagnétique une distance maximale qui peut être réglée au moyen d'un dispositif de réglage de deuxième ventouse, de manière à régler la grande hauteur de levée de la bille.

Le dispositif de réglage du taux de compression à levée de bille pour moteur à taux de compression variable suivant la présente invention comprend un dispositif de réglage de deuxième ventouse qui consiste en un filetage permettant de régler la position de la butée de la palette métallique support par rapport à la position de la cage métallique de la deuxième ventouse électromagnétique, ledit filetage pouvant être arrêté en rotation par des moyens de blocage.

Le dispositif de réglage du taux de compression à levée de bille pour moteur à taux de compression variable suivant la présente invention comprend un actionneur électromécanique qui est constitué d'au moins une ventouse électromagnétique de levée permettant de déplacer une palette métallique de levée qui entraîne le poussoir cylindrique de façon incrémentale et par succession de petits déplacements via un dispositif anti-retour de poussoir, ledit dispositif anti-retour permettant au poussoir cylindrique de se déplacer uniquement en direction de la bille.

Le dispositif de réglage du taux de compression à levée de bille pour moteur à taux de compression variable suivant la présente invention comprend un actionneur électromécanique qui comporte un système de déverrouillage du dispositif anti-retour de poussoir permettant au poussoir cylindrique de revenir à sa position initiale sous l'action d'un ressort et/ou de la pression régnant dans le canal de transfert, ladite position initiale laissant la bille reposer sur son siège.

Le dispositif de réglage du taux de compression à levée de bille pour moteur à taux de compression variable suivant la présente invention comprend un dispositif anti-retour de poussoir de l'actionneur électromécanique qui est constitué d'au moins une première lame métallique solidaire de la palette métallique de levée qui entraîne le poussoir cylindrique, ladite lame métallique agrippant le corps dudit poussoir cylindrique, qui coopère avec au moins une deuxième lame métallique solidaire du carter cylindres du moteur à taux de compression variable et qui agrippe également le corps dudit poussoir cylindrique, la première et la deuxième lame métallique permettant toutes deux au poussoir cylindrique de se déplacer en direction de la bille, mais non en direction inverse.

Le dispositif de réglage du taux de compression à levée de bille pour moteur à taux de compression variable suivant présente invention comprend un système de déverrouillage du dispositif anti-retour de poussoir qui comporte des moyens de levage de lame permettant de lever simultanément la première et la deuxième lame métallique, de manière à libérer le poussoir cylindrique.

Le dispositif de réglage du taux de compression à levée de bille pour moteur à taux de compression variable suivant la présente invention comprend un actionneur électromécanique qui est constitué d'un empilement de couches piézo-électriques qui par leur dilatation sous l'effet d'un courant électrique peuvent pousser le poussoir cylindrique, de sorte que ledit poussoir lève la bille de son siège.

Le dispositif de réglage du taux de compression à levée de bille pour moteur à taux de compression variable suivant la présente invention comprend un actionneur électromécanique qui est constitué d'un moteur piézo-électrique en « H » rampant entre deux parois horizontales, les deux barres verticales du « H » assurant tour à tour le coincement dudit moteur entre lesdites parois par modification de leur longueur, tandis que la barre horizontale du « H » assure le déplacement du moteur également par modification de sa longueur et en coopérant de façon synchronisée avec les variations de longueur des deux barres verticales du « H », ledit moteur assurant le déplacement du poussoir cylindrique auquel il est fixé.

Le dispositif de réglage du taux de compression à levée de bille pour moteur à taux de compression variable suivant la présente invention comprend des moyens de levage qui sont constitués d'un poussoir cylindrique et d'un actionneur hydraulique à piston permettant de manoeuvrer en translation longitudinale ledit poussoir cylindrique, ledit actionneur hydraulique à piston pouvant utiliser la pression régnant dans la centrale hydraulique du moteur à taux de compression variable au moyen d'une électrovanne de commande pour lever la bille de son siège.

Le dispositif de réglage du taux de compression à levée de bille pour moteur à taux de compression variable suivant la présente invention comprend un piston de vérin du vérin de commande hydraulique à double effet qui comporte deux butées élastiques de fin de course qui déterminent la course maximale dudit piston, la première butée élastique permettant de limiter le taux de compression maximal du moteur à taux de compression variable lorsqu'elle entre en contact avec le carter cylindres dudit moteur, la deuxième butée élastique permettant de limiter le taux de compression minimal du moteur à taux de compression variable lorsqu'elle entre au contact avec une culasse du vérin de commande dudit moteur.

Le dispositif de réglage du taux de compression à levée de bille pour moteur à taux de compression variable suivant la présente invention comprend un piston de vérin du vérin de commande hydraulique à double effet fixé à la crémaillère de commande comporte entre la face inférieure dudit piston et la tige inférieure de vérin de la crémaillère de commande une rondelle de réglage qui permet de régler la position dudit piston par rapport à ladite crémaillère, de manière à pouvoir régler le taux de compression du moteur à taux de compression variable lorsque l'une ou l'autre des deux butées élastiques de fin de course entre en contact soit avec le carter cylindres dudit moteur s'agissant de la première butée, soit avec la culasse du vérin de commande dudit moteur s'agissant de la deuxième butée.

Le dispositif de réglage du taux de compression à levée de bille pour moteur à taux de compression variable suivant la présente invention comprend un piston de vérin qui comporte un conduit de dégazage de piston qui relie la chambre inférieure et la chambre supérieure du vérin de commande hydraulique à double effet, ledit conduit permettant à l'air pouvant former une poche dans ladite chambre inférieure de passer dans ladite chambre supérieure.

Le dispositif de réglage du taux de compression à levée de bille pour moteur à taux de compression variable suivant la présente invention comprend un conduit de dégazage de piston qui est constitué d'un espace laissé entre le piston de vérin et la vis de serrage calculé pour constituer une perte de charge limitant le débit de fluide hydraulique entre la chambre inférieure et la chambre supérieure du vérin de commande hydraulique à double effet.

Le dispositif de réglage du taux de compression à levée de bille pour moteur à taux de compression variable suivant la présente invention comprend un conduit de dégazage de piston du piston de vérin comprend un espace important laissé entre le piston de vérin et la vis de serrage, ledit espace laissant passer le fluide hydraulique de la chambre inférieure vers la chambre supérieure du vérin de commande hydraulique à double effet, via une gorge aménagée sur la face inférieure d'une rondelle de dégazage serrée entre ladite vis de serrage et ledit piston de vérin.

Le dispositif de réglage du taux de compression à levée de bille pour moteur à taux de compression variable suivant la présente invention comprend une gorge que comporte la rondelle de dégazage qui est en forme de spirale pour présenter une grande longueur, le début de ladite spirale débouchant dans le trou central de ladite rondelle, tandis que la fin de ladite spirale débouche en périphérie de ladite rondelle.

Le dispositif de réglage du taux de compression à levée de bille pour moteur à taux de compression variable suivant la présente invention comprend un conduit de dégazage de piston qui est constitué d'un conduit capillaire de dégazage aménagé ou rapporté dans le corps de la vis de serrage permettant de fixer le piston de vérin sur la crémaillère de commande, le profil, la section et la longueur dudit conduit capillaire étant calculés pour constituer une perte de charge limitant le passage du fluide hydraulique entre la chambre inférieure et la chambre supérieure du vérin de commande.

Le dispositif de réglage du taux de compression à levée de bille pour moteur à taux de compression variable suivant la présente invention comprend un vérin de commande hydraulique à double effet qui comporte un conduit de dégazage de vérin dont l'entrée est positionnée au point le plus haut de la chambre supérieure et dont la sortie débouche en un point quelconque du moteur à taux de compression variable, ledit conduit de dégazage de vérin pouvant être obstrué ou ouvert au moyen d'une électrovanne de dégazage.

Le dispositif de réglage du taux de compression à levée de bille pour moteur à taux de compression variable suivant la présente invention comporte un capteur de position qui permet de mesurer la position verticale de la crémaillère de commande du moteur à taux de compression variable.

Le dispositif de réglage du taux de compression à levée de bille pour moteur à taux de compression variable suivant la présente invention comporte un capteur de détection de passage qui permet de mesurer le moment de passage d'une crémaillère de piston du moteur à taux de compression variable.

Le dispositif de réglage du taux de compression à levée de bille pour moteur à taux de compression variable suivant présente invention comporte un capteur de pression qui permet de mesurer la pression qui règne dans la chambre supérieure du vérin de commande du moteur à taux de compression variable.

Le dispositif de réglage du taux de compression à levée de bille pour moteur à taux de compression variable suivant la présente invention comporte un capteur de pression qui permet de mesurer la pression qui règne dans une chambre de combustion que comporte le moteur à taux de compression variable.

Le dispositif de réglage du taux de compression à levée de bille pour moteur à taux de compression variable suivant la présente invention comporte un capteur angulaire qui permet de mesurer la position angulaire d'un vilebrequin que comporte le moteur à taux de compression variable.

Le dispositif de réglage du taux de compression à levée de bille pour moteur à taux de compression variable suivant la présente invention comprend une chambre supérieure du vérin de commande comporte un clapet anti-retour de réapprovisionnement, ledit clapet permettant au fluide hydraulique sous pression provenant de la centrale hydraulique du moteur à taux de compression variable d'entrer dans la dite chambre supérieure, mais non d'en sortir.

Le dispositif de réglage du taux de compression à levée de bille pour moteur à taux de compression variable suivant la présente invention comprend une chambre inférieure du vérin de commande qui comporte un clapet anti-retour de réapprovisionnement, ledit clapet permettant au fluide hydraulique sous pression provenant de la centrale hydraulique du moteur à taux de compression variable d'entrer dans la dite chambre inférieure, mais non d'en sortir.

Le dispositif de réglage du taux de compression à levée de bille pour moteur à taux de compression variable suivant la présente invention comprend une platine rapportée sur le carter cylindres du moteur à taux de compression variable dans laquelle est aménagé le canal de transfert, ladite platine comportant les moyens de levage des billes et des moyens d'étanchéité assurant l'étanchéité entre ledit canal de transfert et des conduits intégrés au carter cylindres.

Le dispositif de réglage du taux de compression à levée de bille pour moteur à taux de compression variable suivant la présente invention comprend une première ventouse électromagnétique et une deuxième ventouse électromagnétique qui sont fixées solidairement au carter cylindres du moteur à taux de compression variable, ladite première ventouse pouvant attirer une palette libre de petite levée venant en contact avec le poussoir cylindrique, tandis que la deuxième ventouse électromagnétique permet d'attirer une palette de grande levée solidaire dudit poussoir.

Le dispositif de réglage du taux de compression à levée de bille pour moteur à taux de compression variable suivant la présente invention, comprend des ventouses électromagnétiques de petite levée et de grande levée qui sont rendues solidaires du carter cylindres par un fourreau cylindrique dans lequel elles sont logées, ledit fourreau étant vissé dans ledit carter.

Le dispositif de réglage du taux de compression à levée de bille pour moteur à taux de compression variable suivant la présente invention comprend une palette libre de petite levée qui comporte un ressort de rappel.

Le dispositif de réglage du taux de compression à levée de bille pour moteur à taux de compression variable suivant la présente invention comprend une palette de grande levée solidaire du poussoir cylindrique qui comporte un ressort de rappel.

Le dispositif de réglage du taux de compression à levée de bille pour moteur à taux de compression variable suivant la présente invention comprend une ventouse électromagnétique de petite levée qui comporte des moyens de réglage permettant de régler la hauteur de la petite levée du poussoir cylindrique.

Le dispositif de réglage du taux de compression à levée de bille pour moteur à taux de compression variable suivant la présente invention comprend une ventouse électromagnétique de grande levée qui comporte des moyens de réglage permettant de régler la hauteur de la grande levée du poussoir cylindrique.

Le dispositif de réglage du taux de compression à levée de bille pour moteur à taux de compression variable suivant la présente invention comprend un fourreau cylindrique qui comporte des moyens de réglage permettant de régler la distance entre le poussoir cylindrique et la bille lorsque aucune des ventouses électromagnétiques n'est alimentée en courant électrique.

Le dispositif de réglage du taux de compression à levée de bille pour moteur à taux de compression variable suivant la présente invention comprend pour chacune des billes :
- Des moyens d'obturation complémentaires qui sont constitués d'un pointeau pouvant reposer sur un siège, ledit pointeau pouvant obturer un canal de liaison provenant de l'une ou l'autre des chambres supérieures ou inférieures débouchant dans le canal de transfert reliant lesdites chambres supérieures et inférieures du vérin de commande hydraulique à double effet,
- Et des moyens de tirage permettant de tirer le pointeau de son siège pour laisser passer le fluide hydraulique dans les deux sens.

Le dispositif de réglage du taux de compression à levée de bille pour moteur à taux de compression variable suivant la présente invention comprend un canal de liaison qui peut comporter un trou calibré permettant de contrôler le débit d'huile le traversant et de garantir une meilleure maitrise du débit.

Le dispositif de réglage du taux de compression à levée de bille pour moteur à taux de compression variable suivant la présente invention comprend des moyens de tirage qui sont constitués d'un actionneur électromécanique permettant de manoeuvrer en translation longitudinale le pointeau afin que l'une de ses extrémités vienne s'écarter de son siège pour laisser passer le fluide hydraulique dans les deux sens.

Le dispositif de réglage du taux de compression à levée de bille pour moteur à taux de compression variable suivant la présente invention comprend un actionneur électromécanique qui est constitué, à l'intérieur d'un corps cylindrique, d'une ventouse électromagnétique comportant un bobinage et une cage fixée à l'intérieur dudit corps cylindrique, ledit bobinage de ladite ventouse servant à créer un champ magnétique permettant d'attirer une palette métallique solidaire du pointeau et permettant de tirer ledit pointeau quand ledit bobinage est traversé par un courant électrique.

Le dispositif de réglage du taux de compression à levée de bille pour moteur à taux de compression variable suivant la présente invention comprend un actionneur électromécanique qui est constitué à l'intérieur du corps cylindrique d'une ventouse électromagnétique comportant un bobinage créant un champ magnétique permettant d'attirer une palette de poussoir métallique de levée poussant le poussoir cylindrique quand ledit bobinage est traversé par un courant électrique afin de lever la bille sur une seule hauteur de levée.

Le dispositif de réglage du taux de compression à levée de bille pour moteur à taux de compression variable suivant la présente invention comprend des moyens de levage ou de tirage électromécanique des billes ou pointeaux qui peuvent être étagés afin que la pression régnant dans la centrale hydraulique du moteur à taux de compression variable soit utilisée pour lever les billes ou tirer les pointeaux par l'intermédiaire d'un vérin hydraulique.

La description qui va suivre au regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en coupe schématique illustrant les principaux composants et leur positionnement dans le moteur à taux de compression variable d'un dispositif de réglage du taux de compression à levée de bille ou de clapet suivant la présente invention.
Figure 2 est une vue en coupe montrant un actionneur électromécanique du dispositif de réglage du taux de compression à levée de bille ou de clapet suivant la présente invention.
Figure 3 est une vue en perspective éclatée représentant l'actionneur électromécanique du dispositif de réglage du taux de compression à levée de bille ou de clapet suivant la présente invention.
Figures 4 à 6 sont de vues schématiques illustrant le principe de fonctionnement de l'actionneur électromécanique du dispositif de réglage du taux de compression à levée de bille ou de clapet suivant la présente invention.
Figures 7 à 9 sont de vues schématiques illustrant le principe de fonctionnement d'une première variante de l'actionneur électromécanique du dispositif de réglage du taux de compression à levée de bille ou de clapet suivant la présente invention.
Figures 10 à 12 sont des vues schématiques représentant une seconde variante de l'actionneur électromécanique du dispositif de réglage du taux de compression permettant de déplacer de façon incrémentale et par succession de petits déplacements un poussoir cylindrique permettant de lever la bille ou clapet.
Figures 13 à 20 sont des vues illustrant une variante du dispositif de réglage du taux de compression à levée de bille suivant la présente invention.
Figure 21 est une vue en perspective éclatée montrant le bloc moteur du moteur à taux de compression variable et le positionnement du dispositif de réglage du taux de compression à levée de bille ou de clapet suivant la présente invention sur ledit bloc moteur.

### DESCRIPTION DE L'INVENTION :

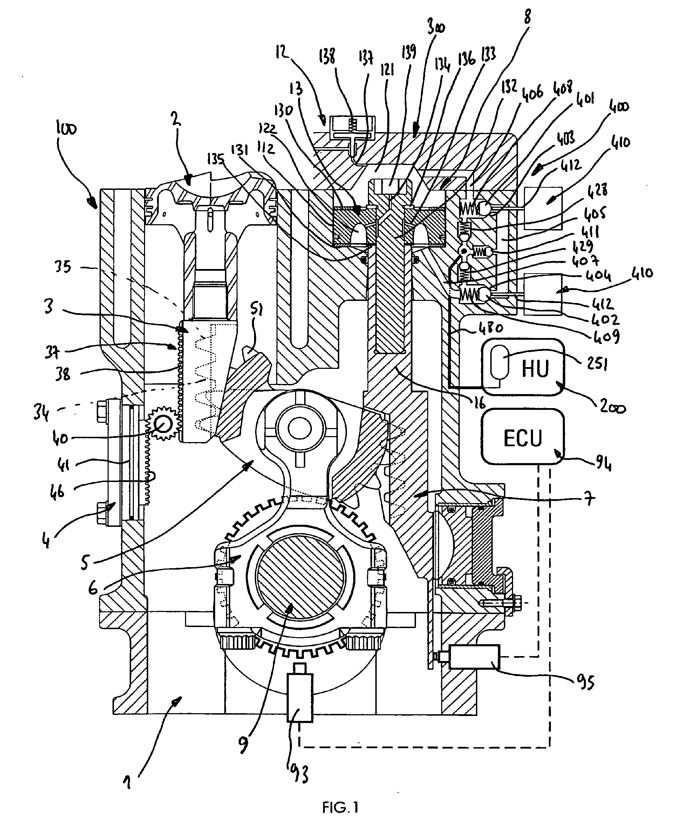

On a montré en figure 1 un dispositif de réglage du taux de compression 400 pour moteur à taux de compression variable comprenant des moyens d'obturation d'au moins un conduit reliant la chambre supérieure 121 et inférieure 122 d'un vérin de commande hydraulique à double effet 8, et des moyens de levage 410 permettant de soulever de leur siège les moyens d'obturation pour laisser passer le fluide hydraulique dans les deux sens.

Selon les demandes de brevet et brevets d'invention appartenant au demandeur, le moteur à taux de compression variable comprend un dispositif de transmission mécanique 1 comportant dans la partie inférieure du piston de combustion 2 un organe de transmission 3 dit « crémaillère de piston » solidaire dudit piston et coopérant, d'une part avec un dispositif de guidage à roulement 4, et d'autre part avec une roue dentée 5.

L'organe de transmission ou crémaillère de piston 3 solidaire du piston de combustion 2 est pourvu sur l'une de ses faces d'une première crémaillère de forte dimension 35 dont les dents 34 coopèrent avec celles 51 de la roue dentée 5.

L'organe de transmission ou crémaillère de piston 3 comporte, à l'opposé de la première crémaillère 35, une seconde crémaillère 37 dont les dents 38 de faible dimension coopèrent avec celles d'un rouleau 40 du dispositif de guidage à roulement 4.

Le carter cylindres 100 est solidaire d'un support 41 comportant des crémaillères 46 assurant la synchronisation du déplacement du rouleau 40 du dispositif de guidage à roulement 4 avec celui du piston de combustion 2.

La roue dentée 5 coopère avec une bielle 6 reliée à un vilebrequin 9 afin de réaliser la transmission du mouvement entre le piston de combustion 2 et ledit vilebrequin 9.

La roue dentée 5 coopère à l'opposé de l'organe de transmission ou crémaillère de piston 3 avec une crémaillère de commande 7 dont la position verticale par rapport au carter cylindres 100 est pilotée par un dispositif de contrôle 12 comportant le vérin de commande 8, et un piston de vérin 13 qui est guidé dans un cylindre de vérin 112 aménagé dans le carter cylindres 100.

Le vérin de commande 8 comporte au-dessus et en dessous du piston de vérin 13 une chambre supérieure 121 et une chambre inférieure 122, lesdites chambres ayant une cylindrée différant l'une de l'autre à même course du piston de vérin 13.

Le vérin de commande 8 est constitué d'une tige inférieure de vérin 16 solidaire de la crémaillère de commande 7 et d'une vis de serrage 132 permettant de fixer le piston de vérin 13 sur ladite tige inférieure de vérin 16 de la crémaillère de commande 7.

La vis de serrage 132 comporte une tête de serrage 139 logée dans la chambre supérieure 121 du vérin de commande 8.

Le piston de vérin 13 du vérin de commande hydraulique à double effet 8 peut comporter deux butées élastiques de fin de course 130, 131 qui déterminent la course maximale dudit piston de vérin.

La première butée 131 permet de limiter le taux de compression maximal du moteur à taux de compression variable lorsqu'elle entre en contact avec le carter cylindres 100 dudit moteur, tandis que la deuxième butée 130 permet de limiter le taux de compression minimal du moteur à taux de compression variable lorsqu'elle entre au contact avec la culasse 300 du vérin de commande 8 dudit moteur.

Le piston de vérin 13 du vérin de commande hydraulique à double effet 8 comporte entre la face inférieure dudit piston 13 et la tige inférieure de vérin 16 de la crémaillère de commande 7 une rondelle de réglage 135 qui permet de régler la position dudit piston 13 par rapport à ladite crémaillère 7.

Cette rondelle de réglage 135 permet de régler le taux de compression du moteur à taux de compression variable lorsque l'une ou l'autre des deux butées élastiques de fin de course 130, 131 entre en contact soit avec le carter cylindres 100 dudit moteur s'agissant de la première butée 131, soit avec la culasse 300 du vérin de commande 8 dudit moteur s'agissant de la deuxième butée 130.

Le piston de vérin 13 comporte un conduit de dégazage de piston 133 qui relie la chambre inférieure 122 et la chambre supérieure 121 du vérin de commande hydraulique à double effet 8. Le conduit de dégazage de piston 133 permet à l'air formant une poche dans la chambre inférieure 122 de passer dans la chambre supérieure 121.

Le conduit de dégazage de piston 133 peut être constitué d'un espace laissé entre le piston de vérin 13 et la vis de serrage 132 calculé pour constituer une perte de charge limitant le débit de fluide hydraulique entre la chambre inférieure 122 et la chambre supérieure 121 du vérin de commande hydraulique à double effet 8.

Le conduit de dégazage de piston 133 du piston de vérin 13 peut comprendre un espace important laissé entre le piston de vérin 13 et la vis de serrage 132, ledit espace laissant passer le fluide hydraulique de la chambre inférieure 122 vers la chambre supérieure 121 du vérin de commande hydraulique à double effet 8, via une gorge aménagée sur la face inférieure d'une rondelle de dégazage 136 serrée entre ladite vis de serrage 132 et ledit piston de vérin 13.

Le profil, la section et la longueur de la gorge sont calculés pour constituer une perte de charge limitant le passage dudit fluide entre la vis de serrage 132 et le piston de vérin 13 du vérin de commande hydraulique à double effet 8.

La gorge aménagée dans la rondelle de dégazage 136 peut être en forme de spirale pour présenter une grande longueur, le début de ladite spirale débouchant dans le trou central de ladite rondelle, tandis que la fin de ladite spirale débouche en périphérie de ladite rondelle.

Le conduit de dégazage de piston 133 du piston de vérin 13 communique avec un conduit capillaire de dégazage 134 aménagé ou rapporté dans le corps de la vis de serrage 132. Le profil, la section et la longueur du conduit capillaire de dégazage 134 sont calculés pour constituer une perte de charge limitant le passage du fluide hydraulique entre la chambre inférieure 122 et la chambre supérieure 121 du vérin de commande hydraulique à double effet 8.

Le vérin de commande hydraulique à double effet 8 peut comporter un conduit de dégazage de vérin 137 dont l'entrée est positionnée au point le plus haut de la chambre supérieure 121 et dont la sortie débouche en un point quelconque du moteur à taux de compression variable.

La sortie du conduit de dégazage de vérin 137 débouche directement ou indirectement dans le carter d'huile 500 dudit moteur. Le conduit de dégazage de vérin 137 peut être obstrué ou ouvert au moyen d'une électrovanne de dégazage 138.

Le moteur à taux de compression variable peut comprendre au moins un capteur de position 95 permettant de mesurer la position verticale de la crémaillère de commande 7.

Le moteur à taux de compression variable peut comprendre au moins un capteur détectant le passage de la crémaillère de piston 3 de manière à pouvoir en déduire le taux de compression dudit moteur tenant compte de la position angulaire du vilebrequin 9 à laquelle le passage de la crémaillère de piston 3 a été détecté.

Le moteur à taux de compression variable peut comprendre au moins un capteur de pression, non représenté, qui permet de mesurer la pression qui règne dans la chambre supérieure 121 du vérin de commande hydraulique à double effet 8.

Le moteur à taux de compression variable peut comporter au moins un capteur de pression, non représenté, qui permet de mesurer la pression qui règne dans une chambre de combustion que comporte le moteur à taux de compression variable.

Le moteur à taux de compression variable peut comprendre au moins un capteur de position angulaire de vilebrequin 93 et au moins un calculateur 94.

Le dispositif de réglage du taux de compression 400 suivant la présente invention comprend des moyens d'obturation qui sont constitués d'au moins deux billes 401, 402 ou clapets reposant chacun(e) sur un siège 403, 404 et obturant respectivement l'une et l'autre extrémité d'un canal de transfert 405, reliant par l'intermédiaire de conduits 406, 407 intégrés au carter cylindres 100, la chambre supérieure 121 et la chambre inférieure 122 du vérin de commande hydraulique à double effet 8.

Les billes 401, 402 agissent comme un clapet anti-retour lorsqu'elles sont maintenues sur leur siège 403, 404 par un ressort 408, 409 afin de ne laisser passer le fluide hydraulique que dans un sens.

Le dispositif de réglage du taux de compression 400 suivant la présente invention comprend des moyens de levage 410 permettant de soulever les billes 401, 402 de leurs sièges 403, 404 pour laisser passer le fluide hydraulique dans les deux sens.

Le dispositif de réglage du taux de compression 400 comprend au moins un clapet anti-retour de compensation 411 permettant au fluide hydraulique de sortir du canal de transfert 405 pour retourner dans une centrale hydraulique 200 du moteur à taux de compression variable contenant une réserve sous pression 251 dudit fluide, mais interdisant audit fluide de retourner dans ledit canal de transfert 405.

Les moyens de levage 410 du dispositif de réglage du taux de compression 400 sont constitués pour chaque bille 401, 402 d'un poussoir cylindrique 412 logé dans le canal de transfert 405.

Les moyens de levage 410 sont constitués d'un actionneur électromécanique 413 permettant de manoeuvrer en translation longitudinale le poussoir cylindrique 412 afin que l'une de ses extrémités vienne au contact puis pousse la bille 401, 402 correspondante de sorte à ce qu'elle se lève de son siège 403, 404.

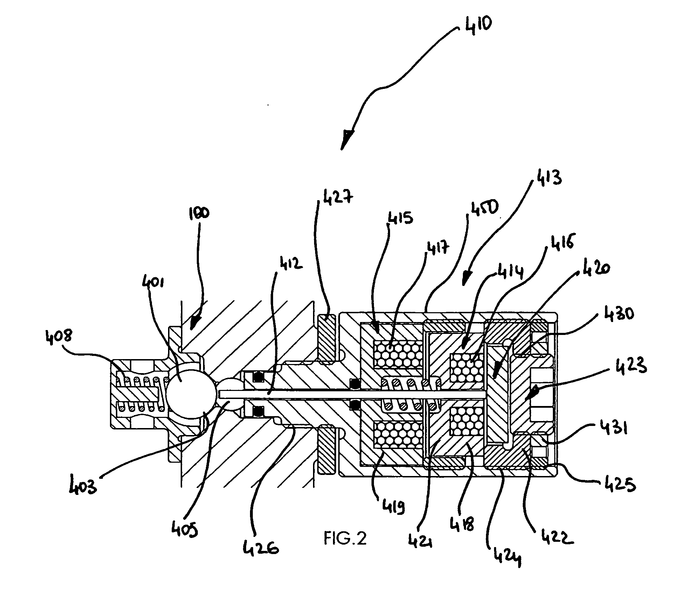

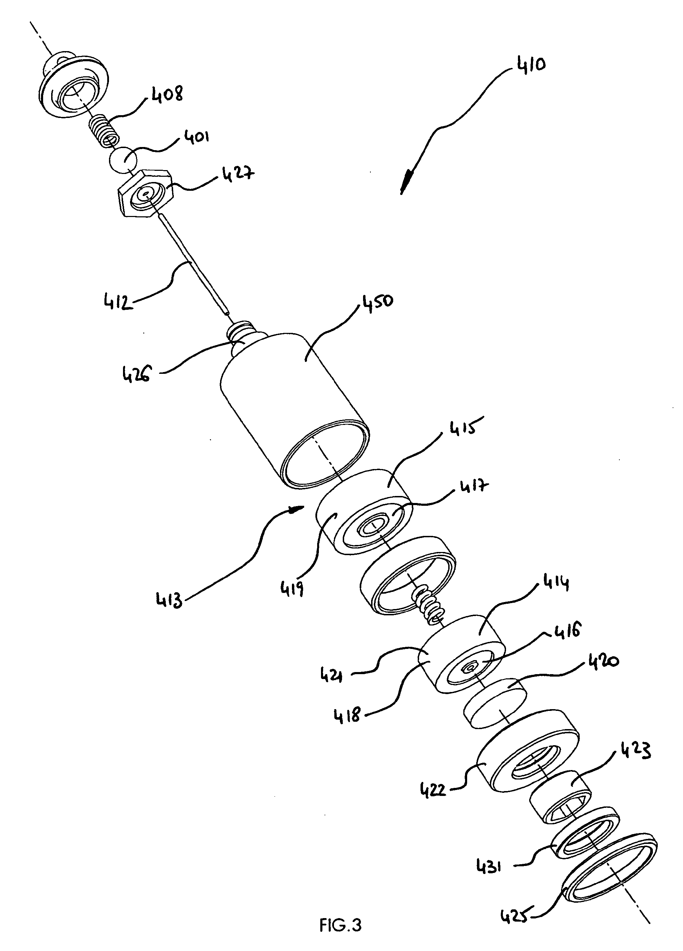

On a montré en figures 2 et 3 un exemple de réalisation, non limitatif, de l'actionneur électromécanique 413 formant les moyens de levage 410 du dispositif de réglage du taux de compression 400.

Il est représenté un seul actionneur électromécanique 413 pilotant la bille 401 de son siège 403 sachant que l'autre actionneur électromécanique 413 levant l'autre bille 402 de son siège 404 est identique.

Ainsi, chaque actionneur électromécanique 413 peut être logé soit directement à l'intérieur du carter cylindres 100 du moteur à taux de compression variable, soit à l'intérieur d'un corps cylindrique 450 solidaire du carter cylindres 100 du moteur à taux de compression variable.

Chaque actionneur électromécanique 413 est constitué d'au moins une ventouse électromagnétique 414, 415 comportant un bobinage 416, 417 et une cage 418, 419.

Le bobinage 416 de la première ventouse électromagnétique 414 sert à créer un champ magnétique permettant d'attirer une palette métallique de poussoir 420 poussant le poussoir cylindrique 412 quand ledit bobinage 416 est traversé par un courant électrique.

Le poussoir cylindrique 412 logé dans le canal de transfert 405 est arrêté en translation par une butée de poussoir 423 qui est placée dans une direction opposée à celle permettant audit poussoir cylindrique 412 de lever la bille 401, 402.

La distance entre la butée de poussoir 423 et la bille 401, 402 est réglable par l'intermédiaire d'un dispositif de réglage de la garde à la bille 426, 427 afin de permettre de régler le jeu entre le poussoir cylindrique 412 et ladite bille 401, 402 lorsque ledit poussoir cylindrique 412 et/ou la palette métallique de poussoir 420 est en contact avec ladite butée de poussoir 423.

Le dispositif de réglage de la garde à la bille_consiste en un filetage 426 aménagé directement ou indirectement dans le carter cylindres 100 du moteur à taux de compression variable et permettant de régler la position de la butée de poussoir 423 par rapport à celle du siège 403, 404 de la bille 401, 402.

Le filetage 426 formant le dispositif de réglage de la garde à la bille peut être arrêté en rotation par des moyens de blocage 427.

Il est prévu que le poussoir cylindrique 412 logé dans le canal de transfert 405 soit rappelé par un ressort, non représenté, qui tend à l'éloigner de la bille 401, 402.

Chaque actionneur électromécanique 413 comporte d'une part une première ventouse électromagnétique 414 permettant de lever la bille 401, 402 sur une petite hauteur et d'autre part une deuxième ventouse électromagnétique 415 permettant de lever ladite bille 401, 402 sur une hauteur plus élevée.

La première ventouse électromagnétique 414 est constituée d'un bobinage 416 et d'une cage métallique 418 qui peut être fixée sur une palette métallique support 421.

La distance maximale entre la palette métallique de poussoir 420 solidaire ou en contact avec le poussoir cylindrique 412 d'une part, et la cage métallique 418 de la première ventouse électromagnétique 414 d'autre part, peut être réglée au moyen d'un dispositif de réglage de première ventouse 423, 430 de sorte à régler la petite hauteur de levée de la bille 401, 402.

Le dispositif de réglage de première ventouse électromagnétique consiste en un filetage 430 permettant de régler la position de la butée 423 solidaire directement ou indirectement du carter cylindres 100 du moteur à taux de compression variable et sur laquelle prend appui la palette métallique de poussoir 420 par rapport à la position de la cage métallique 418, ledit filetage 430 pouvant être arrêté en rotation par des moyens de blocage 431.

La palette métallique support 421 de la première ventouse électromagnétique 414 peut se déplacer en direction de la bille 401, 402.

La distance maximale entre la palette métallique support 421 de la première ventouse électromagnétique 414 et la cage métallique 419 de la deuxième ventouse électromagnétique 415 peut être réglée au moyen d'un dispositif de réglage de deuxième ventouse 422, 424, de manière à régler la grande hauteur de levée de la bille 401, 402.

Le dispositif de réglage de deuxième ventouse consiste en un filetage 424 permettant de régler la position de la butée 422 de la palette métallique support 421 par rapport à la position de la cage métallique 419 de la deuxième ventouse électromagnétique 415, ledit filetage 424 pouvant être arrêté en rotation par des moyens de blocage 425.

Le bobinage 416 de ladite première ventouse 414 sert à créer un champ magnétique permettant d'attirer la palette métallique de poussoir 420 de manière à pousser le poussoir cylindrique 412 quand ledit bobinage 416 est traversé par un courant électrique.

La deuxième ventouse 415 est constituée d'un bobinage 417 et d'une cage métallique 419 qui peut être fixée directement ou indirectement sur le carter cylindres 100 du moteur à taux de compression variable.

Le bobinage 417 de ladite seconde ventouse 415 sert à créer un champ magnétique de manière à attirer la palette métallique support 421 de la première ventouse électromagnétique 414 quand ledit bobinage 417 de ladite deuxième ventouse 415 est traversé par un courant électrique.

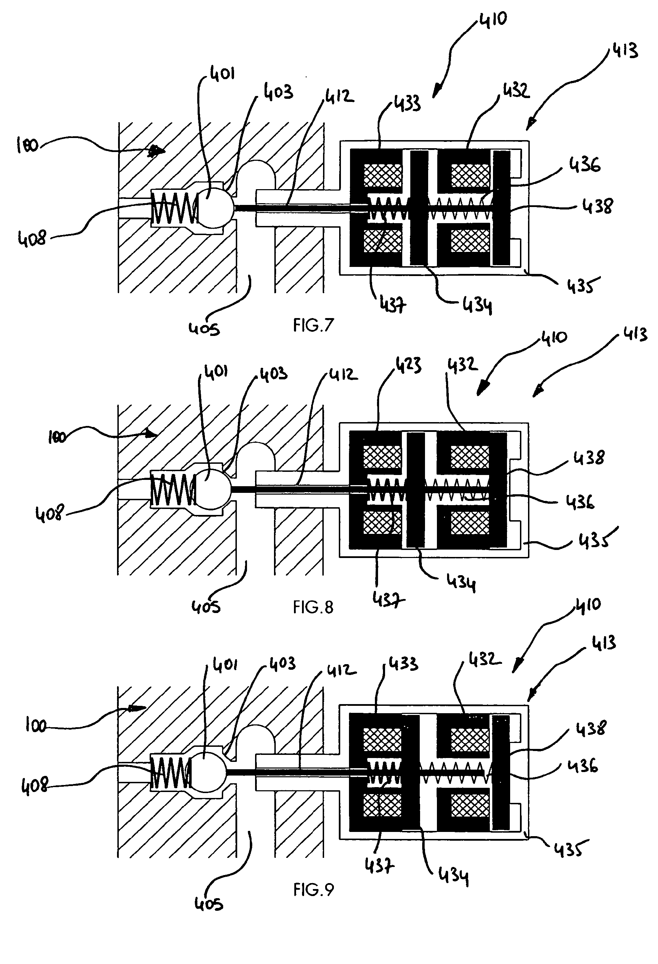

Selon une première variante illustrée en figures 7 à 9 l'actionneur électromécanique 413 formant les moyens de levage 410 du dispositif de réglage du taux de compression 400 est constitué d'une première ventouse électromagnétique 432 et d'une deuxième ventouse électromagnétique 433 fixées solidairement au carter cylindres 100 du moteur à taux de compression variable, ladite première ventouse 432 pouvant attirer une palette libre de petite levée 438 venant en contact avec le poussoir cylindrique 412, tandis que la deuxième ventouse électromagnétique 433 permet d'attirer une palette de grande levée 434 solidaire dudit poussoir.

Les ventouses électromagnétiques de petite et de grande levée 432, 433 sont rendues solidaires du carter cylindres 100 par un fourreau cylindrique 435 dans lequel elles sont logées, ledit fourreau 435 étant vissé dans ledit carter 100.

La palette libre de petite levée 438 comporte un ressort de rappel 436.

La palette de grande levée 434 solidaire du poussoir cylindrique 412 comporte un ressort de rappel 437.

La ventouse électromagnétique de petite levée 432 comporte des moyens de réglage non représentés permettant de régler la hauteur de la petite levée du poussoir cylindrique 412.

La ventouse électromagnétique de grande levée 433 comporte des moyens de réglage non représentés permettant de régler la hauteur de la grande levée du poussoir cylindrique 412.

Le fourreau cylindrique 435 comporte des moyens de réglage non représentés permettant de régler la distance entre le poussoir cylindrique 412 et la bille 401, 402 lorsque aucune des ventouses électromagnétiques 432, 433 n'est alimentée en courant électrique.

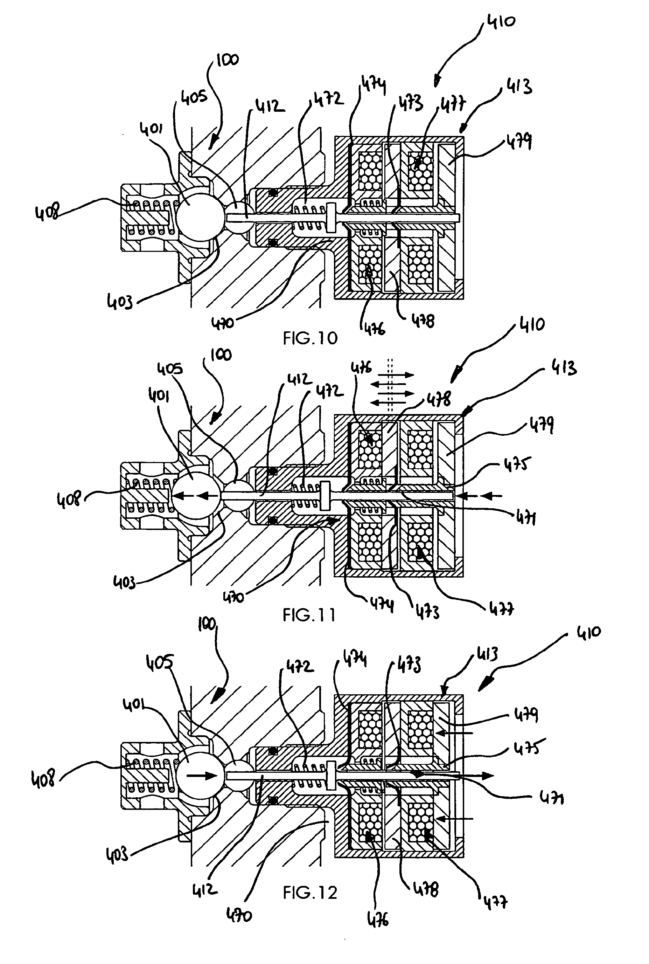

Selon une deuxième variante illustrée en figures 10 à 12 l'actionneur électromécanique 413 formant les moyens de levage 410 du dispositif de réglage du taux de compression 400 est constitué d'au moins une ventouse électromagnétique de levée 476 permettant de déplacer une palette métallique de levée 478 qui entraîne le poussoir cylindrique 412 de façon incrémentale et par succession de petits déplacements via un dispositif anti-retour de poussoir 470.

Le dispositif anti-retour de poussoir 470 permet au poussoir cylindrique 412 de se déplacer uniquement en direction de la bille 401, 402.

L'actionneur électromécanique 413 comporte un système de déverrouillage 471 du dispositif anti-retour de poussoir 470 permettant audit poussoir cylindrique 412 de revenir à sa position initiale sous l'action d'un ressort 472 et/ou de la pression régnant dans le canal de transfert 405, ladite position initiale laissant la bille 401, 402 reposer sur son siège 403, 404.

Le dispositif anti-retour de poussoir 470 de l'actionneur électromécanique 413 est constitué d'au moins une première lame métallique 473 solidaire de la palette métallique de levée 478 qui entraîne le poussoir cylindrique 412.

La lame métallique 473 agrippe le corps dudit poussoir cylindrique 412, qui coopère avec au moins une deuxième lame métallique 474 solidaire du carter cylindres 100 du moteur à taux de compression variable et qui agrippe également le corps dudit poussoir.

La première et la deuxième lame métallique 473, 474 permettent toutes deux au poussoir cylindrique 412 de se déplacer en direction de la bille 401, 402, mais non en direction inverse.

Le système de déverrouillage 471 du dispositif anti-retour de poussoir 470 comprend des moyens de levage de lame 475 permettant de lever simultanément la première et la deuxième lame métallique 473, 474, de sorte à libérer le poussoir cylindrique 412.

On note que les moyens de levage de lame 475 peuvent être actionnés par au moins une ventouse électromagnétique de déverrouillage 477 qui attire une palette métallique de déverrouillage 479 solidaire desdits moyens de levage.

Selon une troisième variante, l'actionneur électromécanique 413 formant les moyens de levage 410 du dispositif de réglage du taux de compression 400 est constitué d'un empilement de couches piézo-électriques qui, par leur dilatation sous l'effet d'un courant électrique, peuvent pousser le poussoir cylindrique 412, de sorte que ledit poussoir lève la bille 401, 402 ou clapet de son siège 403, 404.

Selon une quatrième variante, l'actionneur électromécanique 413 formant les moyens de levage 410 du dispositif de réglage du taux de compression 400 est constitué d'un moteur piézo-électrique en « H » rampant entre deux parois horizontales, les deux barres verticales du « H » assurant tour à tour le coincement dudit moteur entre lesdites parois par modification de leur longueur, tandis que la barre horizontale du « H » assure le déplacement du moteur également par modification de sa longueur et en coopérant de façon synchronisée avec les variations de longueur des deux barres verticales du « H », ledit moteur assurant le déplacement du poussoir cylindrique 412 auquel il est fixé.

Selon une cinquième variante, les moyens de levage 410 du dispositif de réglage du taux de compression 400 peuvent être constitués d'un poussoir cylindrique 412 pouvant être manoeuvré en translation longitudinale par l'intermédiaire d'un actionneur hydraulique à piston, non représenté, ledit actionneur pouvant utiliser la pression régnant dans la centrale hydraulique 200 du moteur à taux de compression variable au moyen d'une électrovanne de commande pour lever la bille 401, 402 de son siège 403, 404.

Egalement, le dispositif de réglage du taux de compression 400 suivant la présente invention comporte un clapet anti-retour 428 permettant le réapprovisionnement de la chambre supérieure 121 du vérin de commande hydraulique à double effet 8. Le clapet anti-retour de réapprovisionnement 428 permet au fluide hydraulique sous pression, provenant de la centrale hydraulique 200 du moteur à taux de compression variable, d'entrer dans la chambre supérieure 121 mais non d'en sortir.

Le dispositif de réglage du taux de compression à levée de bille 400 suivant la présente invention comporte un clapet anti-retour 429 permettant le réapprovisionnement de la chambre inférieure 122 du vérin de commande hydraulique à double effet 8. Le clapet anti-retour de réapprovisionnement 429 permet au fluide hydraulique sous pression provenant de la centrale hydraulique 200 du moteur à taux de compression variable d'entrer dans la chambre inférieure 122, mais non d'en sortir.

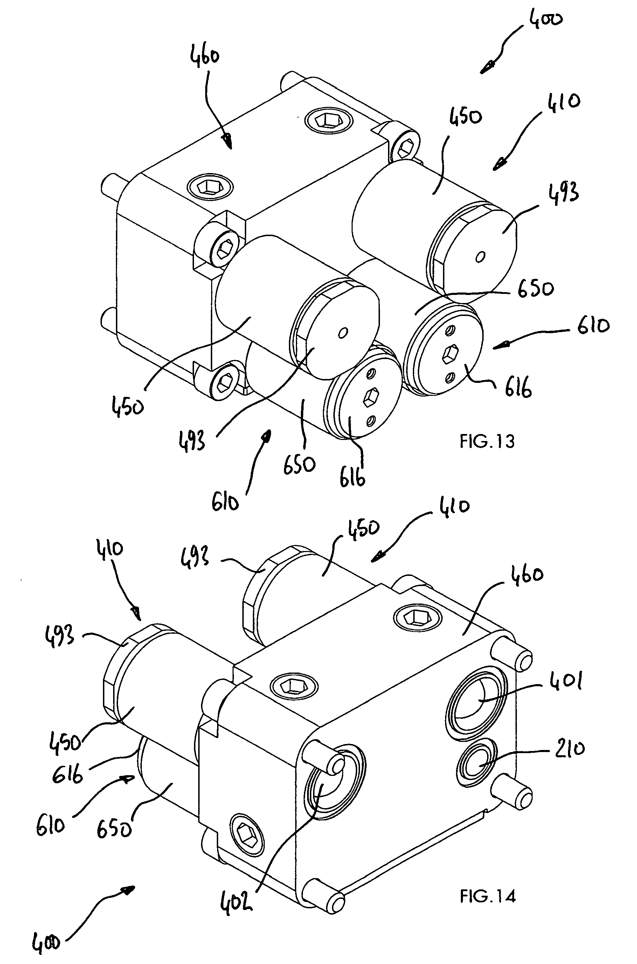

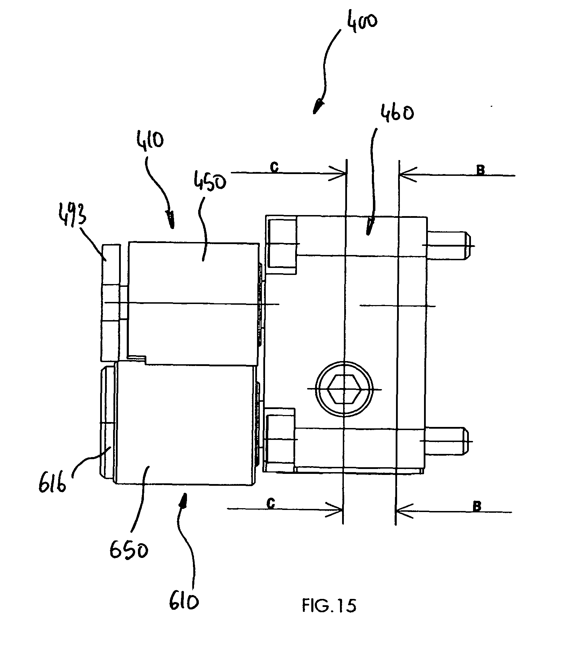

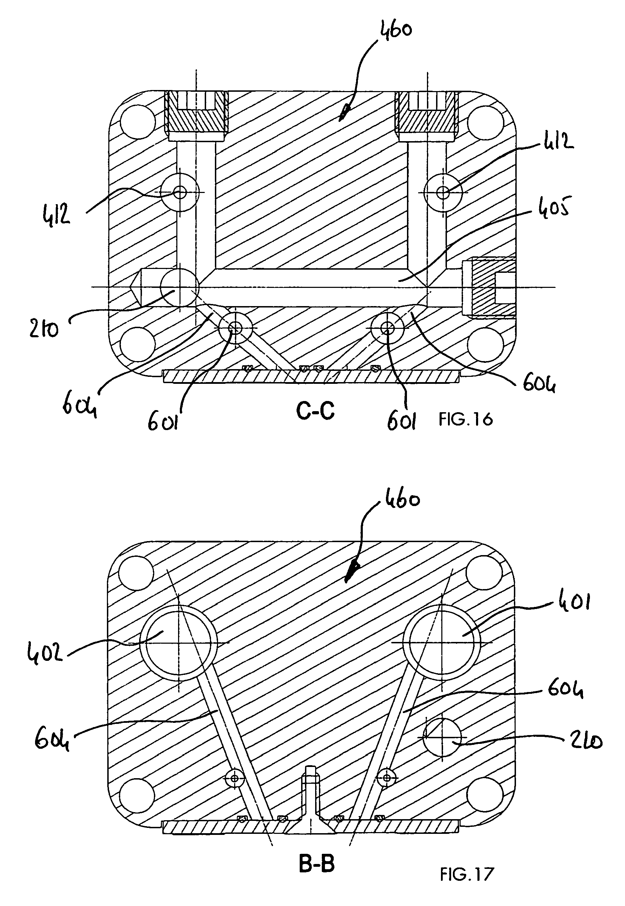

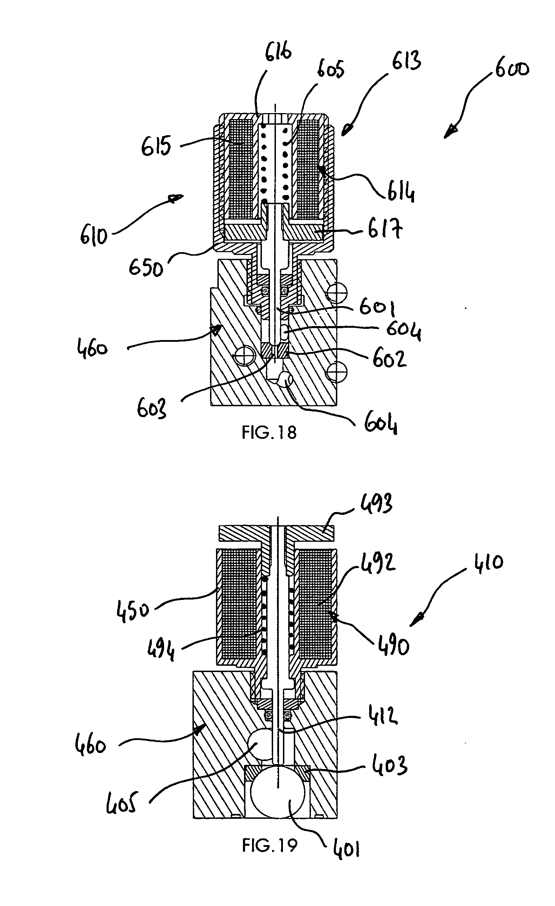

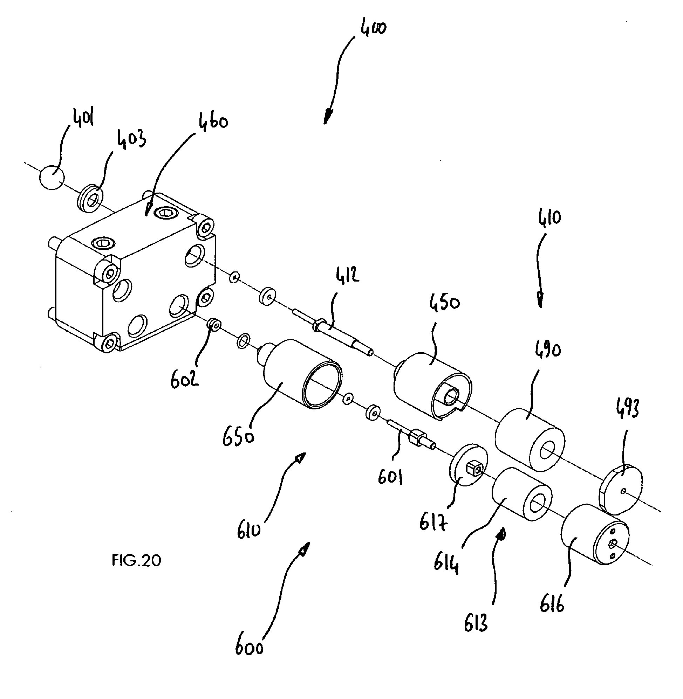

On a montré en figures 13 à 20 une variante du dispositif de réglage du taux de compression 400 pour moteur à taux de compression variable comprenant des moyens d'obturation d'au moins un conduit reliant la chambre supérieure 121 et inférieure 122 d'un vérin de commande hydraulique à double effet 8, et des moyens de levage 410 permettant de soulever de leur siège les moyens d'obturation pour laisser passer le fluide hydraulique dans les deux sens.

Le dispositif de réglage du taux de compression 400 suivant la présente invention comprend des moyens d'obturation qui sont constitués d'au moins deux billes 401, 402 ou clapets reposant chacun(e) sur un siège 403, 404 et obturant respectivement l'une et l'autre extrémité d'un canal de transfert 405, reliant par l'intermédiaire de conduits 406, 407 intégrés au carter cylindres 100, la chambre supérieure 121 et la chambre inférieure 122 du vérin de commande hydraulique à double effet 8.

Les billes 401, 402 agissent comme un clapet anti-retour lorsqu'elles sont maintenues sur leur siège 403, 404 par un ressort 408, 409 afin de ne laisser passer le fluide hydraulique que dans un sens.

Le dispositif de réglage du taux de compression 400 suivant la présente invention comprend des moyens de levage 410 permettant de soulever les billes 401, 402 de leur siège 403, 404 pour laisser passer le fluide hydraulique dans les deux sens.

Les moyens de levage 410 sont constitués pour chaque bille 401, 402 d'un poussoir cylindrique 412 logé dans le canal de transfert 405.

Les moyens de levage 410 sont constitués d'un actionneur électromécanique 413 permettant de manoeuvrer en translation longitudinale le poussoir cylindrique 412 afin que l'une de ses extrémités vienne au contact puis pousse la bille 401, 402 correspondante de sorte qu'elle se lève de son siège 403, 404.

Il est représenté un seul actionneur électromécanique 413 pilotant la bille 401 de son siège 403 sachant que l'autre actionneur électromécanique 413 levant l'autre bille 402 de son siège 404 est identique.

Ainsi, chaque actionneur électromécanique 413 peut être logé soit directement à l'intérieur du carter cylindres 100 du moteur à taux de compression variable, soit à l'intérieur d'un corps cylindrique 450 solidaire du carter cylindres 100 du moteur à taux de compression variable ou d'une platine 460 rapportée sur le carter cylindres 100 et comportant un canal d'arrivée 210 de la centrale hydraulique 200.

Dans ce cas particulier, chaque actionneur électromécanique 413 est constitué par exemple à l'intérieur du corps cylindrique 450 d'une ventouse électromagnétique 490 comportant un bobinage 492 créant un champ magnétique permettant d'attirer une palette de poussoir métallique de levée 493 poussant le poussoir cylindrique 412 quand ledit bobinage 492 est traversé par un courant électrique.

Le déplacement du poussoir cylindrique 412 permet d'assurer le déplacement de la bille 401, 402 correspondante pour lever ladite bille de son siège 403, 404 et laisser passer le fluide hydraulique dans les deux sens.

La palette poussoir métallique de levée 493 est solidaire du poussoir cylindrique_412 autour duquel est positionné un ressort de rappel 494 permettant de ramener ledit poussoir cylindrique 412 dans sa position d'origine lorsque la bobine 492 n'est plus traversée par un courant électrique afin que la bille correspondante 401, 402 vienne reposer contre son siège 403, 404.

Le dispositif de réglage du taux de compression 400 comprend pour chaque bille 401, 402 des moyens d'obturation complémentaires 600 qui sont constitués d'un pointeau 601 pouvant reposer sur un siège 602, ledit pointeau pouvant obturer un canal de liaison 604 provenant de l'une ou l'autre des chambres supérieure 121 ou inférieure 122 débouchant dans le canal de transfert 405 reliant lesdites chambres supérieure 121 et inférieure 122 du vérin de commande hydraulique à double effet 8, ledit canal de liaison 604 pouvant comporter un trou calibré 603.

Le trou calibré 603 permet de contrôler le débit d'huile le traversant et de garantir une meilleure maitrise du débit.

Le dispositif de réglage du taux de compression 400 suivant la présente invention comprend pour chaque pointeau 601 prévu pour chaque bille 401, 402 des moyens de tirage 610 permettant de tirer ledit pointeau 601 de son siège 602 pour laisser passer le fluide hydraulique dans les deux sens.

Les moyens de tirage 610 sont constitués d'un actionneur électromécanique 613 permettant de manoeuvrer en translation longitudinale le pointeau 601 afin que l'une de ses extrémités vienne s'écarter de son siège 602 pour laisser passer le fluide hydraulique dans les deux sens.

Il est représenté un seul actionneur électromécanique 613 permettant de manoeuvrer le pointeau 601 de son siège 602 correspondant par exemple à la bille 401 sachant que l'autre actionneur électromécanique 613 correspondant à l'autre bille 402 et pilotant l'autre pointeau 601 de son siège 602 est identique.

Ainsi, chaque actionneur électromécanique 613 peut être logé soit directement à l'intérieur du carter cylindres 100 du moteur à taux de compression variable, soit à l'intérieur d'un corps cylindrique 650 solidaire du carter cylindres 100 du moteur à taux de compression variable ou solidaire de la platine 460 rapportée sur le carter cylindres 100.

Dans ce cas particulier, chaque actionneur électromécanique 613 est constitué par exemple à l'intérieur du corps cylindrique 650 d'une ventouse électromagnétique 614 comportant un bobinage 615 et une cage 616 fixée à l'intérieur du corps cylindrique 650.

Le bobinage 615 de ladite ventouse 614 sert à créer un champ magnétique permettant d'attirer une palette métallique 617 solidaire du pointeau 601 et permettant de tirer ledit pointeau 601 quand ledit bobinage 615 est traversé par un courant électrique.

Le soulèvement du pointeau 601 de son siège 602 permet de laisser passer le fluide hydraulique au travers du canal de liaison 604.

Dans cet agencement particulier le dispositif de réglage du taux de compression 400 suivant la présente invention comprend des moyens d'obturation qui sont constitués d'au moins deux billes 401, 402 et des seconds moyens d'obturation complémentaires 600 qui sont constitués pour chaque bille 401, 402 d'un pointeau 601, lesdits moyens d'obturation étant placés en parallèle.

Ainsi, les moyens d'obturation complémentaires 600 permettent, lorsque le pointeau 601 est écarté de son siège 602, d'assurer le passage d'un petit débit d'huile entrainant une chute de pression entre l'amont et l'aval de la bille 401, 402 correspondante permettant de diminuer l'effort nécessaire à la levée de ladite bille de son siège 403, 404 et donc de prévoir notamment une ventouse électromagnétique 490 de moindre puissance.

En outre, les moyens d'obturation complémentaires 600 permettent de contrôler précisément la crémaillère de commande 7 du moteur à taux de compression variable particulièrement lorsque celle-ci se trouve proche de sa position de consigne

Le déplacement préalable du pointeau 601 de son siège 602 permet aussi de n'effectuer qu'une seule hauteur ou niveau de levée de la bille 401, 402 correspondante, ladite bille 401, 402 n'étant plus utilisée que pour obtenir un débit d'huile important dans le canal de transfert 405

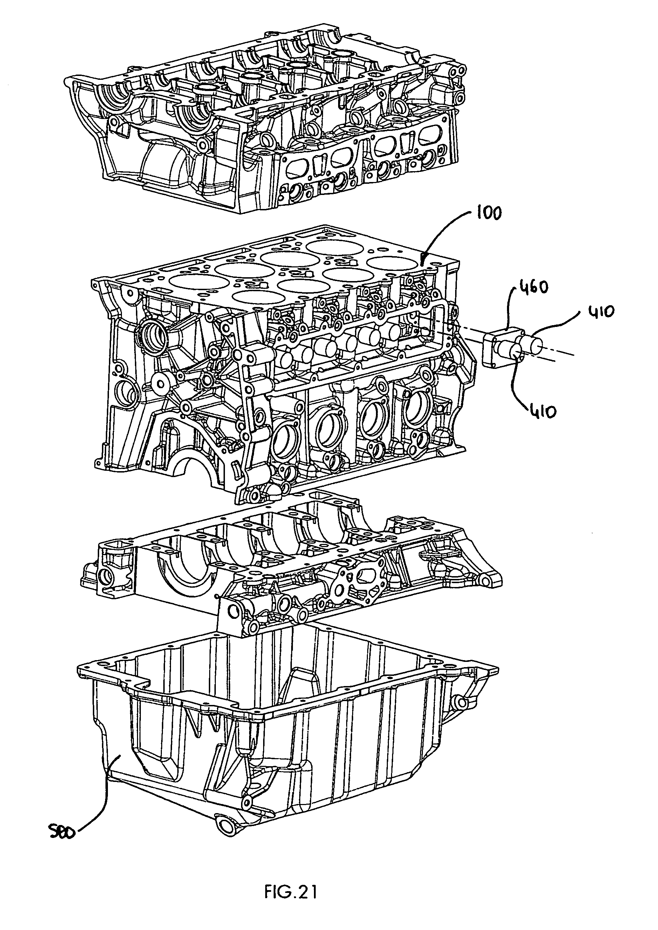

On a illustré en figure 21 le dispositif de réglage du taux de compression 400 à billes 401, 402 ou clapets comportant une platine 460 rapportée sur le carter cylindres 100 du moteur à taux de compression variable dans laquelle est aménagé le canal de transfert 405.

Egalement, la platine 460 porte les moyens de levage 410 des billes 401, 402 du dispositif de réglage du taux de compression 400 et selon le cas les moyens de tirage 610 des pointeaux 601. La platine 460 comporte des moyens qui assurent l'étanchéité entre le canal de transfert 405 et les conduits 406, 407, intégrés au carter cylindres 100 avec lesquels communique ledit canal de transfert 405.

On note que selon un mode particulier de réalisation, la ou les ventouses électromagnétiques peuvent être pilotées en rapport cyclique d'ouverture ou PWM (Pulse Width Modulation), ce mode de pilotage permettant de trouver des positions intermédiaires entre la position où la palette de la ou lesdites ventouse(s) se trouve la plus éloignée de la bobine de ladite ventouse, et la position où elle est au plus proche de ladite bobine.

### FONCTIONNEMENT :

Selon un mode particulier de réalisation, le fonctionnement du dispositif de réglage du taux de compression 400 à levée de bille pour moteur à taux de compression variable est le suivant :

Lorsque le moteur à taux de compression variable est utilisé à un taux de compression donné et en l'absence de toute variation dudit taux de compression, les deux billes 401, 402, qui permettent respectivement de laisser passer le fluide hydraulique de la chambre supérieure 121 à la chambre inférieure du vérin 122 du vérin de commande 8 et inversement, reposent sur leur siège 403, 404.

En ce cas, ledit fluide ne peut se déplacer ni depuis la chambre supérieure 121 vers la chambre inférieure 122, ni dans le sens inverse, ce qui a pour effet de maintenir la position du vérin de commande 8 dudit moteur à une valeur déterminée, et de maintenir fixe le taux de compression dudit moteur.

Tenant compte des conditions de fonctionnement du moteur à taux de compression variable, il est régulièrement nécessaire d'en adapter le taux de compression. Selon le cas, cette variation du taux de compression dudit moteur sert à maximiser les performances ou le rendement dudit moteur ou encore, à en améliorer le fonctionnement du catalyseur trois voies.

Si, tenant compte de ces diverses nécessités, le calculateur 94 (ECU) du moteur à taux de compression variable doit augmenter le taux de compression dudit moteur, il envoie alors un courant électrique à l'actionneur électromécanique 413 qui a à charge de lever la bille 402 de la chambre inférieure 122 du vérin de commande 8, ce qui a précisément pour effet de lever ladite bille de son siège 404, ledit actionneur 413 levant ladite bille 402 par l'intermédiaire de son poussoir cylindrique 412.

Ainsi, la levée de la bille 402 de son siège 404, permet au fluide hydraulique de sortir de la chambre inférieure 122 du vérin de commande 8 et de pénétrer dans la chambre supérieure 121 via le canal de transfert 405, la bille 401 de la chambre supérieure 121 du vérin de commande 8 laissant quant à elle le fluide hydraulique rentrer dans ladite chambre supérieure 121, mais ne le laissant pas en repartir, du fait de son effet anti-retour.

Comme on le voit sur la figure 1 aucune pompe hydraulique n'est nécessaire pour assurer le déplacement du piston de vérin 13 du vérin de commande 8.

Ledit déplacement est en effet assuré par les efforts alternatifs qui sont imprimés audit piston de vérin 13 par la crémaillère de commande 7 du moteur à taux de compression variable sur laquelle est fixé ledit piston, ladite crémaillère 7 étant elle-même assujettie aux efforts résultants de la pression des gaz contenus dans la chambre de combustion du moteur et/ou aux efforts résultants de l'inertie des principales pièces en mouvement dudit moteur que sont la roue dentée 5, le piston de combustion 2, et la crémaillère de piston 3 et son dispositif de guidage à roulement 4.

Comme on peut aisément le déduire à la vue de la figure 1, le déplacement du piston de vérin 13 du vérin de commande 8 en direction de la chambre inférieure 122 induit une augmentation de volume de la chambre supérieure 121 plus grande que la diminution de volume de la chambre inférieure 122, ceci résultant de l'absence de tige supérieure de vérin qui est remplacée par une vis de serrage 132.

De ce fait, la pression dans la chambre supérieure 121 diminue lorsque le piston de vérin 13 se déplace en direction de la chambre inférieure 122, et le clapet anti-retour de réapprovisionnement 428 de la chambre supérieure 121 laisse entrer le fluide hydraulique sous pression provenant de la centrale hydraulique 200 du moteur à taux de compression variable, dans ladite chambre supérieure 121.

A l'inverse, lorsque le calculateur 94 (ECU) du moteur à taux de compression variable doit abaisser le taux de compression dudit moteur, il envoie un courant électrique à l'actionneur électromécanique 413 qui a à charge de lever la bille 401 de la chambre supérieure 121 du vérin de commande 8, ce qui a pour effet de lever ladite bille 401 de son siège 403, ledit actionneur 413 levant ladite bille par l'intermédiaire de son poussoir cylindrique 412.

Ainsi la levée de la bille 401 de son siège 403, permet au fluide hydraulique de sortir de la chambre supérieure 121 du vérin de commande 8 et de pénétrer dans la chambre inférieure 122 du vérin de commande 8 via le canal de transfert 405, tandis que la bille 402 de la chambre inférieure 122 du vérin de commande 8 laisse, quant à elle, le fluide hydraulique rentrer dans ladite chambre inférieure 122 mais ne le laisse pas en repartir, du fait de l'effet anti-retour de ladite bille.

Comme on peut aisément le déduire à la vue de la figure 1, le déplacement du piston de vérin 13 du vérin de commande 8 en direction de la chambre supérieure 121 induit une augmentation du volume de la chambre inférieure 122 plus petite que la diminution du volume de la chambre supérieure121, du fait de l'absence de la tige supérieure de vérin remplacée par la vis de serrage 132.

De ce fait, la pression dans les chambres 121, 122 et dans le canal de transfert 405 devient supérieure à celle régnant dans la centrale hydraulique 200 lorsque le piston de vérin 13 se déplace en direction de la chambre supérieure 121. En conséquence, le clapet anti-retour de compensation 411 dont la sortie débouche par l'intermédiaire d'un conduit 480 dans la centrale hydraulique 200 laisse sortir le fluide hydraulique sous pression provenant de la chambre supérieure 121 vers ladite centrale hydraulique via le canal de transfert 405.

On note en ce cas que le volume de fluide hydraulique expulsé par le vérin de commande 8 vers la centrale hydraulique 200 via le clapet anti-retour de compensation 411 est approximativement égal à la différence entre le volume de la chambre supérieure 121 balayé par le piston de vérin 13 et le volume de la chambre inférieure 122 simultanément balayé par ledit piston 13 lors de la manoeuvre de déplacement effectuée par ledit piston, ladite manoeuvre visant à abaisser le taux de compression du moteur à taux de compression variable.

Comme on le constate, l'action conjuguée des billes 401, 402 et des efforts alternatifs appliqués au piston de vérin 13 par les autres composants mobiles du moteur à taux de compression variable définit un fonctionnement qui s'apparente à celui d'un cliquet anti-retour, ledit piston 13 pouvant se déplacer dans la direction de la chambre 121 ou 122 selon le cas dont la bille 401, 402 est maintenue ouverte par son actionneur électromécanique 413, mais non dans la direction inverse.

Qu'il s'agisse d'une manoeuvre visant à augmenter le taux de compression du moteur à taux de compression variable ou d'une autre visant à l'abaisser, le moment où la bille 401, 402 correspondante maintenue levée par son actionneur 413 doit être reposée sur son siège 403, 404 est déterminé par le calculateur 94 (ECU) du moteur à taux de compression variable.

Ledit moment est déduit par ledit calculateur 94 (ECU) à partir de la position de la crémaillère de commande 7, ladite position lui étant retournée par un capteur de position 95 avec lequel il coopère, et ledit capteur mesurant en permanence la position verticale de ladite crémaillère 7.

Ainsi renseigné, le calculateur 94 (ECU) peut reposer la bille 401, 402 sur son siège 403, 404 lorsque ladite crémaillère de commande 7 a atteint la position correspondant au taux de compression recherché.

La coopération entre le calculateur 94 (ECU) et le capteur de position 95 de la crémaillère de commande 7 permet également de compenser toute dérive de la position de ladite crémaillère de commande 7 pouvant résulter de diverses fuites, qu'il s'agisse d'une fuite entre la chambre supérieure 121 et inférieure 122 du vérin de commande 8 due à un défaut d'étanchéité du joint du piston de vérin 13, ou qu'il s'agisse de fuites entre l'une quelconque desdites chambres 121, 122 et l'extérieur du vérin de commande 8.

En ce cas, le calculateur 94 (ECU) peut ordonner la levée temporaire de la bille 401, 402 de la chambre opposée à la direction de la dérive du piston de vérin 13, jusqu'à ce que ledit piston revienne à la position recherchée.

Lorsqu'une fuite survient entre l'une quelconque des chambres supérieure 121 et/ou inférieure 122 et l'extérieur du vérin de commande 8, ledit vérin est réapprovisionné en fluide hydraulique par le clapet anti-retour de réapprovisionnement 428 de la chambre supérieure 121, directement s'agissant de la chambre supérieure, ou indirectement via ladite chambre supérieure et le canal de transfert 405 lorsque la bille 401 de ladite chambre supérieure 121 est ouverte ou entrouverte, s'agissant de la chambre inférieure 122.

Selon un mode particulier de réalisation du dispositif de réglage du taux de compression 400 selon l'invention, outre la position de la crémaillère de commande 7 qui est transmise en permanence au calculateur 94 (ECU) par un capteur de position 95, ledit calculateur peut également être renseigné sur la position angulaire du vilebrequin 9 du moteur à taux de compression variable par le capteur angulaire de vilebrequin 93, connu en soi, dudit moteur.

Selon ce mode de réalisation, la différence de pression entre l'amont et l'aval de la bille 401 de la chambre supérieure 121 et de la bille 402 de la chambre inférieure 122 lorsque lesdites billes 401, 402 reposent sur leur siège 403, 404 aura été préalablement enregistrée dans la mémoire du calculateur 94 (ECU) pour différentes positions angulaires dudit vilebrequin 9 correspondant à différents points de régime et de charge du moteur à taux de compression variable.

Ces valeurs préenregistrées permettent au calculateur 94 (ECU) de déduire la différence de pression entre l'amont et l'aval des billes 401, 402 de la chambre supérieure 121 et de la chambre inférieure 122 du vérin de commande 8 en tout point de régime et de charge dudit moteur et pour toute position angulaire du vilebrequin 9.

Selon ce mode de réalisation, le calculateur 94 (ECU) peut déclencher la levée de la bille 401, 402 de la chambre supérieure 121 ou inférieure 122 du vérin de commande 8 à un angle de vilebrequin 9 correspondant à une différence de pression faible entre l'amont et l'aval de ladite bille pour permettre la levée de ladite bille 401, 402 de son siège 403, 404 par son actionneur électromécanique 413 sans nécessiter de la part dudit actionneur de produire un effort de poussée élevé sur le poussoir cylindrique 412.

En outre, selon ce mode de réalisation, le calculateur 94 (ECU) peut anticiper le comportement du vérin de commande 8 avec une bonne précision car ledit calculateur 94 (ECU) dispose alors des informations nécessaires pour prévoir le nombre de degrés de rotation du vilebrequin 9 requis pour laisser passer la quantité de fluide hydraulique entre la bille 401, 402 de la chambre supérieure 121 ou inférieure 122 du vérin de commande 8 et son siège 403, 404 qui permet au piston de vérin 13 d'atteindre sa nouvelle consigne de position.

Le calculateur 94 (ECU) peut ainsi en déduire la hauteur et la durée de la levée de la bille 401, 402 sur son siège 403, 404 qui sont nécessaires pour que le piston de vérin 13 atteigne sa nouvelle consigne de position.

On note que la hauteur et la levée de la bille 401, 402 peuvent être corrigées par le calculateur 94 (ECU) en fonction de la viscosité du fluide hydraulique, afin d'augmenter la précision de positionnement du piston vérin 13. Ladite viscosité peut notamment être déduite par le calculateur 94 (ECU) à partir de la température du fluide hydraulique, ladite température lui étant transmise par un capteur, non représenté.

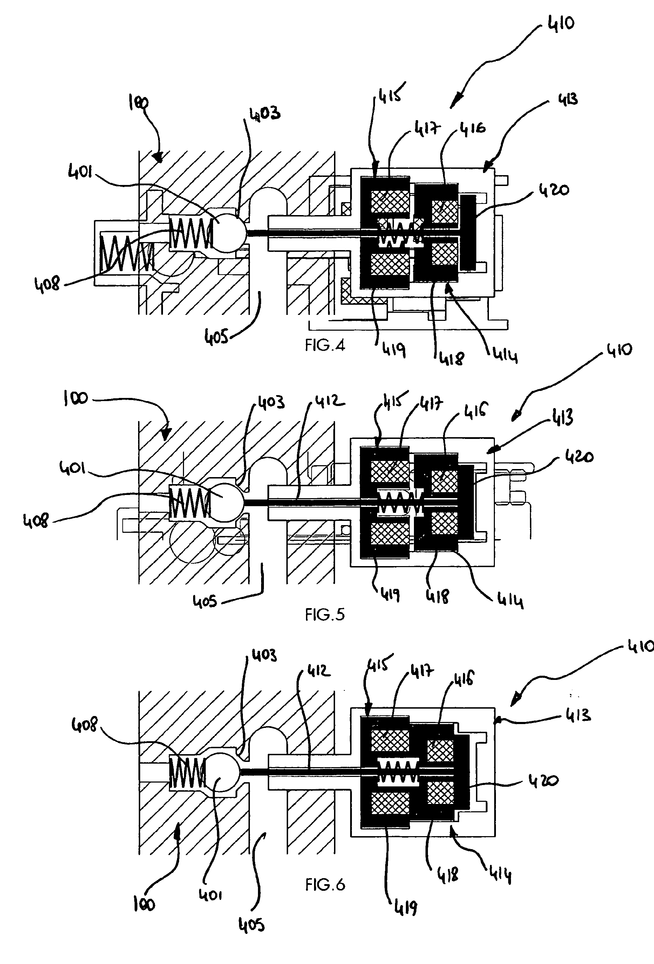

On note que selon un mode particulier de réalisation, chaque actionneur électromécanique 413 qui assure la levée des billes 401, 402 de la chambre supérieure 121 ou inférieure 122 du vérin de commande 8 de leur siège 403, 404, autorise deux hauteurs de levée desdites billes, une petite (figures 5, 8) et une grande (figures 6 et 9).

Pour un effort donné exercé sur le piston de vérin 13 du vérin de commande 8 par la crémaillère de commande 7, la grande levée permet d'obtenir une grande vitesse de déplacement dudit piston, tandis que la petite levée permet d'obtenir une petite vitesse de déplacement dudit piston.

Ladite grande vitesse permet d'aller rapidement d'une position de piston de vérin 13 éloignée de la position de consigne à une autre position voisine de ladite position de consigne, tandis que ladite petite vitesse permet d'aller de ladite position voisine de ladite position de consigne, à ladite position de consigne.

Ladite petite vitesse peut également être utilisée pour compenser la dérive lente du piston de vérin 13 induite par d'éventuelles fuites, ou pour aller d'une position de consigne à une autre position de consigne lorsque lesdites positions sont proches l'une de l'autre.

Selon un mode particulier de réalisation du dispositif de réglage du taux de compression 400 selon l'invention, ce résultat peut être obtenu en dotant l'actionneur électromécanique 413 de deux ventouses électromagnétiques 414, 415. La première ventouse électromagnétique 414, assurant la petite levée de la bille 401, 402 de la chambre supérieure 121 ou inférieure 122 du vérin de commande 8, tandis que la seconde ventouse électromagnétique 415, en assure la grande levée.

Pour réaliser une petite levée, le calculateur 94 (ECU) du moteur à taux de compression variable alimente en courant électrique la première ventouse électromagnétique 414 de l'actionneur électromécanique 413, ce qui a pour effet d'attirer puis de coller magnétiquement la palette métallique de poussoir 420 sur la cage 418 de ladite première ventouse 414. Le déplacement de la palette métallique de poussoir 420 permet de pousser le poussoir cylindrique 412 vers la bille 401, 402, afin de lever ladite bille sur une faible hauteur (figure 5).

Pour réaliser une grande levée, le calculateur 94 (ECU) du moteur à taux de compression variable alimente en courant électrique la première ventouse électromagnétique 414 de l'actionneur électromécanique 413, réalisant ainsi une petite levée de la bille 401, 402, tandis que simultanément ou immédiatement ensuite, ledit calculateur 94 (ECU) alimente en courant électrique la deuxième ventouse électromagnétique 415 dudit actionneur électromécanique 413 (figure 6).

Ceci a pour effet d'attirer puis de coller magnétiquement la palette métallique support 421 sur laquelle est fixée la cage 418 de la première ventouse électromagnétique 414 sur la cage 419 de la deuxième ventouse électromagnétique 415. Le cumul des déplacements de la palette métallique de poussoir 420 vers la cage 418 de la première ventouse électromagnétique 414 qui pousse le poussoir cylindrique 412 et de la palette métallique support 421 de la première ventouse électromagnétique 414 vers la cage 419 de la deuxième ventouse électromagnétique 415, permet de réaliser une grande levée de la bille 401, 402 (figure 6).

On constate que lorsque le moteur à taux de compression variable a été arrêté pendant un certain temps, l'air dissout ou mélangé au fluide hydraulique tend à se séparer dudit fluide.

Du fait de sa moindre densité, ledit air tend à se rassembler pour former des poches d'air au-dessus dudit fluide et ceci, tant à la surface dudit fluide que contient la chambre inférieure 122 du vérin de commande 8 qu'à la surface dudit fluide que contient la chambre supérieure 121.

Du fait de leur grande compressibilité, lesdites poches d'air peuvent entraîner une instabilité de positionnement du piston de vérin 13 et il est nécessaire de les évacuer au moyen du dispositif de dégazage 133, 134 et 137 que comporte le vérin de commande 8.

Le dispositif de dégazage achemine l'air qui s'échappe de la surface du fluide hydraulique contenu dans la chambre inférieure 122 du vérin de commande 8 vers la chambre supérieure 121 via le conduit de dégazage de piston 133 et le conduit capillaire 134 aménagés dans le piston de vérin 13 et qui relient la chambre inférieure 122 et la chambre supérieure 121 du vérin de commande 8.

Une fois l'ensemble de l'air contenu dans le vérin de commande 8 rassemblé en une poche à la surface du fluide hydraulique contenu dans la chambre supérieure 121, ledit air est évacué par l'électrovanne de dégazage 138 lorsque le moteur à taux de compression variable est mis en marche.

Pour obtenir ce résultat, ladite électrovanne 138 ouvre le conduit de dégazage 137 du vérin de commande 8 dont l'entrée est positionnée au point le plus haut de la chambre supérieure 121 et dont la sortie débouche en un point quelconque dudit moteur, ledit point étant relié directement ou indirectement au carter d'huile 500 dudit moteur.

L'électrovanne de dégazage 138 ouvre ledit conduit de dégazage 137 le temps nécessaire à l'évacuation totale de ladite poche d'air formée dans la chambre supérieure 121 du vérin de commande 8.

Le conduit de dégazage 133, et particulièrement le conduit capillaire 134 qui sont aménagés dans le piston de vérin 13 et qui relient la chambre inférieure 122 et la chambre supérieure 121 du vérin de commande 8 présentent une petite section de passage ce qui constitue une perte de charge importante. Ladite perte de charge limite le passage de l'huile entre les chambres supérieure 121 et inférieure 122, mais permet le passage rapide de l'air contenu dans la chambre inférieure 122 vers la chambre supérieure 121.

Cependant, ledit conduit de dégazage 133 et le conduit capillaire 134 aménagés dans le piston de vérin 13 induisent une dérive dudit piston, ladite dérive étant compensée par le calculateur 94 (ECU) qui repositionne régulièrement ledit piston en levant, selon le cas, la bille 401, 402 de la chambre supérieure 121 et/ou de la chambre inférieure 122 du vérin de commande 8.

Lorsque le moteur à taux de compression variable est mis en marche, sa température augmente de même que celle du fluide hydraulique que contient son vérin de commande 8. Cette augmentation de température tend à augmenter la pression qu'exerce ledit fluide sur les parois internes dudit vérin, du fait de la dilatation dudit fluide sous l'effet de ladite température.

Pour contrôler ladite pression, le calculateur 94 (ECU) du moteur à taux de compression variable fait légèrement varier cycliquement la consigne de la position du piston de vérin 13 de sorte que le volume excédentaire de fluide peut retourner à la centrale hydraulique 200 dudit moteur via le clapet anti-retour de compensation 411, ledit clapet permettant audit fluide de sortir du canal de transfert 405 pour retourner dans ladite centrale 200 mais interdisant audit fluide de retourner dans ledit canal de transfert 405.

Selon un mode particulier de réalisation les moyens de levage ou tirage électromécanique des billes 401, 402 ou pointeau 601 peuvent être étagé.

En ce cas la pression régnant dans la centrale hydraulique 200 du moteur à taux de compression variable est utilisée pour lever les billes 401, 402 ou tirer les pointeaux 601 par l'intermédiaire d'un vérin hydraulique.

Selon cette variante le moyens électromécaniques sont utilisés pour mettre en relation l'huile sous pression contenue dans ladite centrale hydraulique 200 avec ledit vérin hydraulique d'une part, ou pour mettre en relation le vérin hydraulique en relation avec le carter d'huile du moteur d'autre part.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tout autre équivalent selon les revendications.

## Revendications

1. Dispositif de réglage du taux de compression d'un moteur à taux de compression variable comprenant un vérin de commande hydraulique à double effet (8) comportant une chambre supérieure (121) et une chambre inférieure (122) et au moins un piston de vérin (13) fixé à une crémaillère de commande (7) par une vis de serrage (132), **caractérisé en ce qu'**il comprend
• Au moins deux billes (401, 402) ou clapets reposant chacune sur un siège (403, 404) et obturant respectivement l'une et l'autre extrémité d'un canal de transfert (405) reliant la chambre supérieure (121) et la chambre inférieure (122) du vérin de commande (8), lesdites billes (401, 402) agissant comme un clapet anti-retour lorsqu'elles sont maintenues sur leur siège (403, 404) par un ressort (408, 409) afin de ne laisser passer le fluide hydraulique que dans un sens ;
• Et des moyens de levage (410) permettant de soulever les billes (401, 402) de leur siège (403, 404) pour que lesdites billes laissent passer le fluide hydraulique dans les deux sens, lesdits moyens de levage (410) étant constitués d'un poussoir cylindrique (412) logé dans le canal de transfert (405), et d'un actionneur électromécanique (413) permettant de manoeuvrer en translation longitudinale ledit poussoir cylindrique (412) afin que son extrémité vienne au contact puis pousse la bille (401, 402) de manière à ce qu'elle se lève de son siège (403, 404), ledit actionneur électromécanique (413) comportant une première ventouse électromagnétique (414, 432) permettant de lever la bille (401, 402) sur une petite hauteur, et une deuxième ventouse électromagnétique (415, 433) permettant de lever ladite bille (401, 402) sur une hauteur plus élevée.

2. Dispositif de réglage du taux de compression à levée de bille pour moteur à taux de compression variable suivant la revendication 1, **caractérisé en ce qu'**il comprend au moins un clapet anti-retour de compensation (411) permettant au fluide hydraulique de sortir du canal de transfert (405) pour retourner dans une centrale hydraulique (200) du moteur à taux de compression variable contenant une réserve sous pression (251) dudit fluide, mais interdisant audit fluide de retourner dans ledit canal de transfert.

3. Dispositif de réglage du taux de compression à levée de bille pour moteur à taux de compression variable suivant la revendication 2, **caractérisé en ce que** le poussoir cylindrique (412) est rappelé par un ressort qui tend à l'éloigner de la bille (401, 402).

4. Dispositif de réglage du taux de compression à levée de bille pour moteur à taux de compression variable suivant la revendication 1, **caractérisé en ce que** le poussoir cylindrique (412) est arrêté en translation par une butée de poussoir, ladite butée étant placée dans une direction qui est opposée à celle permettant audit poussoir cylindrique (412) de lever la bille (401, 402).

5. Dispositif de réglage du taux de compression à levée de bille pour moteur à taux de compression variable suivant la revendication 4, **caractérisé en ce que** la distance entre la butée de poussoir et la bille (401, 402) est réglable par l'intermédiaire d'un dispositif de réglage de la garde à la bille de sorte à permettre de régler le jeu entre le poussoir cylindrique (412) et ladite bille (401, 402) lorsque ledit poussoir cylindrique (412) est en contact avec ladite butée de poussoir.

6. Dispositif de réglage du taux de compression à levée de bille pour moteur à taux de compression variable suivant la revendication 5, **caractérisé en ce que** le dispositif de réglage de la garde à la bille consiste en un filetage aménagé directement ou indirectement dans le carter cylindres (100) du moteur à taux de compression variable et permettant de régler la position de la butée de poussoir par rapport à celle du siège (403, 404) de la bille (401, 402) ledit filetage pouvant être arrêté en rotation par des moyens de blocage.

7. Dispositif de réglage du taux de compression à levée de bille pour moteur à taux de compression variable suivant la revendication 1, **caractérisé en ce que** l'actionneur électromécanique (413) est logé à l'extérieur du canal de transfert (405).

8. Dispositif de réglage du taux de compression à levée de bille pour moteur à taux de compression variable suivant la revendication 1, **caractérisé en ce que** l'actionneur électromécanique (413) est constitué d'au moins une ventouse électromagnétique comportant un bobinage et une cage fixée directement ou indirectement sur le carter cylindres (100) du moteur à taux de compression variable, ledit bobinage servant à créer un champ magnétique permettant d'attirer une palette métallique de poussoir poussant le poussoir cylindrique (412) quand ledit bobinage est traversé par un courant électrique.

9. Dispositif de réglage du taux de compression à levée de bille pour moteur à taux de compression variable suivant la revendication 1, **caractérisé en ce que** la première ventouse électromagnétique (414) de l'actionneur électromécanique (413) est constituée d'un bobinage (416) et d'une cage métallique (418) qui peut être fixée sur une palette métallique support (421), ladite palette métallique support (421) pouvant se déplacer en direction de la bille (401, 402) mais étant arrêtée dans la direction opposée par un dispositif de réglage de deuxième ventouse (422, 424) solidaire directement ou indirectement du carter cylindres (100) du moteur à taux de compression variable.

10. Dispositif de réglage du taux de compression à levée de bille pour moteur à taux de compression variable suivant la revendication 1, **caractérisé en ce que** la deuxième ventouse électromagnétique (415) de l'actionneur électromécanique (413) est constituée d'un bobinage (417) et d'une cage métallique (419) fixée directement ou indirectement sur le carter cylindres (100) du moteur à taux de compression variable, ledit bobinage (417) servant à créer un champ magnétique de manière à attirer la palette métallique support (421) de la première ventouse électromagnétique (414) lorsque ledit bobinage (417) de ladite deuxième ventouse électromagnétique (415) est traversé par un courant électrique.

11. Dispositif de réglage du taux de compression à levée de bille pour moteur à taux de compression variable suivant la revendication 1, **caractérisé en ce que** la distance maximale entre une palette métallique de poussoir (420) solidaire ou en contact avec le poussoir cylindrique (412) d'une part, et la cage métallique (418) de la première ventouse électromagnétique (414) d'autre part, peut être réglée au moyen d'un dispositif de réglage de première ventouse (423, 430) de sorte à régler la petite hauteur de levée de la bille (401, 402).

12. Dispositif de réglage du taux de compression à levée de bille pour moteur à taux de compression variable suivant la revendication 11, **caractérisé en ce que** le dispositif de réglage de première ventouse électromagnétique consiste en un filetage (430) permettant de régler la position de la butée (423) solidaire directement ou indirectement du carter cylindres (100) du moteur à taux de compression variable et sur laquelle prend appui la palette métallique de poussoir (420) par rapport à la position de la cage métallique (418), ledit filetage (430) pouvant être arrêté en rotation par des moyens de blocage (431).

13. Dispositif de réglage du taux de compression à levée de bille pour moteur à taux de compression variable suivant la revendication 11, **caractérisé en ce que** la distance maximale entre la palette métallique support (421) de la première ventouse électromagnétique (414) et la cage métallique (419) de la deuxième ventouse électromagnétique (415) peut être réglée au moyen d'un dispositif de réglage de deuxième ventouse (422, 424), de manière à régler la grande hauteur de levée de la bille (401, 402).

14. Dispositif de réglage du taux de compression à levée de bille pour moteur à taux de compression variable suivant la revendication 13, **caractérisé en ce que** le dispositif de réglage de deuxième ventouse consiste en un filetage (424) permettant de régler la position de la butée (422) de la palette métallique support (421) par rapport à la position de la cage métallique (419) de la deuxième ventouse électromagnétique (415), ledit filetage (424) pouvant être arrêté en rotation par des moyens de blocage (425).

15. Dispositif de réglage du taux de compression à levée de bille pour moteur à taux de compression variable suivant la revendication 1, **caractérisé en ce que** le piston de vérin (13) du vérin de commande hydraulique à double effet (8) comporte deux butées élastiques de fin de course (130, 131) qui déterminent la course maximale dudit piston, la première butée élastique (131) permettant de limiter le taux de compression maximal du moteur à taux de compression variable lorsqu'elle entre en contact avec le carter cylindres (100) dudit moteur, la deuxième butée élastique (130) permettant de limiter le taux de compression minimal du moteur à taux de compression variable lorsqu'elle entre au contact avec une culasse (300) du vérin de commande (8) dudit moteur.

16. Dispositif de réglage du taux de compression à levée de bille pour moteur à taux de compression variable suivant la revendication 15, **caractérisé en ce que** le piston de vérin (13) du vérin de commande hydraulique à double effet (8) fixé à la crémaillère de commande (7) comporte entre la face inférieure dudit piston (13) et la tige inférieure de vérin (16) de la crémaillère de commande (7) une rondelle de réglage (135) qui permet de régler la position dudit piston par rapport à ladite crémaillère, de manière à pouvoir régler le taux de compression du moteur à taux de compression variable lorsque l'une ou l'autre des deux butées élastiques de fin de course (130, 131) entre en contact soit avec le carter cylindres (100) dudit moteur s'agissant de la première butée (131), soit avec la culasse (300) du vérin de commande (8) dudit moteur s'agissant de la deuxième butée (130).

17. Dispositif de réglage du taux de compression à levée de bille pour moteur à taux de compression variable suivant la revendication 1, **caractérisé en ce que** le piston de vérin (13) comporte un conduit de dégazage de piston (133) qui relie la chambre inférieure (122) et la chambre supérieure (121) du vérin de commande hydraulique à double effet (8), ledit conduit permettant à l'air pouvant former une poche dans ladite chambre inférieure (122) de passer dans ladite chambre supérieure (121).

18. Dispositif de réglage du taux de compression à levée de bille pour moteur à taux de compression variable suivant la revendication 17, **caractérisé en ce que** le conduit de dégazage de piston (133) est constitué d'un espace laissé entre le piston de vérin (13) et la vis de serrage (132) calculé pour constituer une perte de charge limitant le débit de fluide hydraulique entre la chambre inférieure (122) et la chambre supérieure (121) du vérin de commande hydraulique à double effet (8).

19. Dispositif de réglage du taux de compression à levée de bille pour moteur à taux de compression variable suivant la revendication 17, **caractérisé en ce que** le conduit de dégazage de piston (133) du piston de vérin (13) comprend un espace important laissé entre le piston de vérin (13) et la vis de serrage (132), ledit espace laissant passer le fluide hydraulique de la chambre inférieure (122) vers la chambre supérieure (121) du vérin de commande hydraulique à double effet (8), via une gorge aménagée sur la face inférieure d'une rondelle de dégazage (136) serrée entre ladite vis de serrage (132) et ledit piston de vérin (13).

20. Dispositif de réglage du taux de compression à levée de bille pour moteur à taux de compression variable suivant la revendication 19, **caractérisé en ce que** la gorge que comporte la rondelle de dégazage (136) est en forme de spirale pour présenter une grande longueur, le début de ladite spirale débouchant dans le trou central de ladite rondelle, tandis que la fin de ladite spirale débouche en périphérie de ladite rondelle.

21. Dispositif de réglage du taux de compression à levée de bille pour moteur à taux de compression variable suivant la revendication 17, **caractérisé en ce que** le conduit de dégazage de piston (133) est constitué d'un conduit capillaire de dégazage (134) aménagé ou rapporté dans le corps de la vis de serrage (132) permettant de fixer le piston de vérin (13) sur la crémaillère de commande (7), le profil, la section et la longueur dudit conduit capillaire (134) étant calculés pour constituer une perte de charge limitant le passage du fluide hydraulique entre la chambre inférieure (122) et la chambre supérieure (121) du vérin de commande (8).

22. Dispositif de réglage du taux de compression à levée de bille pour moteur à taux de compression variable suivant la revendication 1, **caractérisé en ce que** le vérin de commande hydraulique à double effet (8) comporte un conduit de dégazage de vérin (137) dont l'entrée est positionnée au point le plus haut de la chambre supérieure (121) et dont la sortie débouche en un point quelconque du moteur à taux de compression variable, ledit conduit de dégazage de vérin (137) pouvant être obstrué ou ouvert au moyen d'une électrovanne de dégazage (138).

23. Dispositif de réglage du taux de compression à levée de bille pour moteur à taux de compression variable suivant la revendication 1, **caractérisé en ce qu'**il comporte un capteur de position (95) qui permet de mesurer la position verticale de la crémaillère de commande (7) du moteur à taux de compression variable.

24. Dispositif de réglage du taux de compression à levée de bille pour moteur à taux de compression variable suivant la revendication 1, **caractérisé en ce qu'**il comporte un capteur de détection de passage qui permet de mesurer le moment de passage d'une crémaillère de piston (3) du moteur à taux de compression variable.

25. Dispositif de réglage du taux de compression à levée de bille pour moteur à taux de compression variable suivant la revendication 1, **caractérisé en ce qu'**il comporte un capteur de pression qui permet de mesurer la pression qui règne dans la chambre supérieure (121) du vérin de commande (8) du moteur à taux de compression variable.

26. Dispositif de réglage du taux de compression à levée de bille pour moteur à taux de compression variable suivant la revendication 1, **caractérisé en ce qu'**il comporte un capteur de pression qui permet de mesurer la pression qui règne dans une chambre de combustion que comporte le moteur à taux de compression variable.

27. Dispositif de réglage du taux de compression à levée de bille pour moteur à taux de compression variable suivant la revendication 1, **caractérisé en ce qu'**il comporte un capteur angulaire (93) qui permet de mesurer la position angulaire d'un vilebrequin (9) que comporte le moteur à taux de compression variable.

28. Dispositif de réglage du taux de compression à levée de bille pour moteur à taux de compression variable suivant la revendication 1, **caractérisé en ce que** la chambre supérieure (121) du vérin de commande (8) comporte un clapet anti-retour de réapprovisionnement (428), ledit clapet permettant au fluide hydraulique sous pression provenant de la centrale hydraulique (200) du moteur à taux de compression variable d'entrer dans la dite chambre supérieure (121), mais non d'en sortir.

29. Dispositif de réglage du taux de compression à levée de bille pour moteur à taux de compression variable suivant la revendication 1, **caractérisé en ce que** la chambre inférieure (122) du vérin de commande (8) comporte un clapet anti-retour de réapprovisionnement (429), ledit clapet permettant au fluide hydraulique sous pression provenant de la centrale hydraulique (200) du moteur à taux de compression variable d'entrer dans la dite chambre inférieure (122), mais non d'en sortir.

30. Dispositif de réglage du taux de compression à levée de bille pour moteur à taux de compression variable suivant la revendication 1, **caractérisé en ce qu'**il comporte une platine (460) rapportée sur le carter cylindres (100) du moteur à taux de compression variable dans laquelle est aménagé le canal de transfert (405), ladite platine comportant les moyens de levage (410) des billes (401, 402) et des moyens d'étanchéité assurant l'étanchéité entre ledit canal de transfert (405) et des conduits (406, 407) intégrés au carter cylindres (100).

31. Dispositif de réglage du taux de compression à levée de bille pour moteur à taux de compression variable suivant la revendication 1, **caractérisé en ce que** la première ventouse électromagnétique (432) et la deuxième ventouse électromagnétique (433) sont fixées solidairement au carter cylindres (100) du moteur à taux de compression variable, ladite première ventouse (432) pouvant attirer une palette libre de petite levée (438) venant en contact avec le poussoir cylindrique (412), tandis que la deuxième ventouse électromagnétique (433) permet d'attirer une palette de grande levée (434) solidaire dudit poussoir.

32. Dispositif de réglage du taux de compression à levée de bille pour moteur à taux de compression variable suivant la revendication 31, **caractérisé en ce que** les ventouses électromagnétiques de petite levée (432) et de grande levée (433) sont rendues solidaires du carter cylindres (100) par un fourreau cylindrique (435) dans lequel elles sont logées, ledit fourreau (435) étant vissé dans ledit carter (100).

33. Dispositif de réglage du taux de compression à levée de bille pour moteur à taux de compression variable suivant la revendication 31, **caractérisé en ce que** la palette libre de petite levée (438) comporte un ressort de rappel (436).

34. Dispositif de réglage du taux de compression à levée de bille pour moteur à taux de compression variable suivant la revendication 31, **caractérisé en ce que** la palette de grande levée (434) solidaire du poussoir cylindrique (412) comporte un ressort de rappel (437).

35. Dispositif de réglage du taux de compression à levée de bille pour moteur à taux de compression variable suivant la revendication 31, **caractérisé en ce que** la ventouse électromagnétique de petite levée (432) comporte des moyens de réglage permettant de régler la hauteur de la petite levée du poussoir cylindrique (412).

36. Dispositif de réglage du taux de compression à levée de bille pour moteur à taux de compression variable suivant la revendication 31, **caractérisé en ce que** la ventouse électromagnétique de grande levée (433) comporte des moyens de réglage permettant de régler la hauteur de la grande levée du poussoir cylindrique (412).

37. Dispositif de réglage du taux de compression à levée de bille pour moteur à taux de compression variable suivant la revendication 32, **caractérisé en ce que** le fourreau cylindrique (435) comporte des moyens de réglage permettant de régler la distance entre le poussoir cylindrique (412) et la bille (401, 402) lorsque aucune des ventouses électromagnétiques (432, 433) n'est alimentée en courant électrique.

38. Dispositif de réglage du taux de compression à levée de bille pour moteur à taux de compression variable suivant la revendication 1, **caractérisé en ce qu'**il comprend pour chacune des billes (401, 402) :
• Des moyens d'obturation complémentaires (600) qui sont constitués d'un pointeau (601) pouvant reposer sur un siège (602), ledit pointeau (601) pouvant obturer un canal de liaison (604) provenant de l'une ou l'autre des chambres supérieure (121) ou inférieure (122) débouchant dans le canal de transfert (405) reliant lesdites chambres supérieure (121) et inférieure (122) du vérin de commande hydraulique à double effet (8),
• Et des moyens de tirage (610) permettant de tirer le pointeau (601) de son siège (602) pour laisser passer le fluide hydraulique dans les deux sens.

39. Dispositif de réglage du taux de compression à levée de bille pour moteur à taux de compression variable suivant la revendication 38, **caractérisé en ce que** le canal de liaison (604) peut comporter un trou calibré (603) permettant de contrôler le débit d'huile le traversant et de garantir une meilleure maitrise du débit.

40. Dispositif de réglage du taux de compression à levée de bille pour moteur à taux de compression variable suivant la revendication 38, **caractérisé en ce que** les moyens de tirage (610) sont constitués d'un actionneur électromécanique (613) permettant de manoeuvrer en translation longitudinale le pointeau (601) afin que l'une de ses extrémités vienne s'écarter de son siège (602) pour laisser passer le fluide hydraulique dans les deux sens.

41. Dispositif de réglage du taux de compression à levée de bille pour moteur à taux de compression variable suivant la revendication 40, **caractérisé en ce que** l'actionneur électromécanique (613) est constitué à l'intérieur d'un corps cylindrique (650) d'une ventouse électromagnétique (614) comportant un bobinage (615) et une cage (616) fixée à l'intérieur dudit corps cylindrique (650), ledit bobinage (615) de ladite ventouse (614) servant à créer un champ magnétique permettant d'attirer une palette métallique (617) solidaire du pointeau (601) et permettant de tirer ledit pointeau (601) quand ledit bobinage (615) est traversé par un courant électrique.

## Claims

1. Device for adjusting the compression ratio of a variable compression ratio engine comprising a hydraulic double-acting control actuator (8) comprising an upper chamber (121) and a lower chamber (122) and at least one actuator piston (13) attached to a control rack (7) by a lock screw (132), **characterized in that** it comprises:
• at least two balls (401, 402) or valve elements each resting on a seat (403, 404) and closing off respectively one and the other end of a transfer channel (405) connecting the upper chamber (121) and the lower chamber (122) of the control actuator (8), said balls (401, 402) acting as a nonreturn valve element when they are held on their seat (403, 404) by a spring (408, 409) in order to allow the hydraulic fluid to pass in only one direction;
• and lifting means (410) making it possible to raise the balls (401, 402) from their seat (403, 404) so that said balls allow the hydraulic fluid to pass in both directions, said lifting means (410) consisting of a cylindrical lifter (412) housed in the transfer channel (405), and an electromechanical actuator (413) making it possible to move said cylindrical lifter (412) in longitudinal translation so that its end comes into contact with and then pushes the ball (401, 402) so that it lifts from its seat (403, 404), said electromechanical actuator (413) comprising a first electromagnetic suction cup (414, 432) making it possible to lift the ball (401, 402) over a small height, and a second electromagnetic suction cup (415, 433) making it possible to lift said ball (401, 402) over a greater height.

2. Ball-lift device for adjusting the compression ratio for a variable compression ratio engine according to Claim 1, **characterized in that** it comprises at least one compensating nonreturn valve element (411) allowing the hydraulic fluid to come out of the transfer channel (405) in order to return to a hydraulic power unit (200) of the variable compression ratio engine containing a pressurized reserve (251) of said fluid, but preventing said fluid from returning to said transfer channel.

3. Ball-lift device for adjusting the compression ratio for a variable compression ratio engine according to Claim 2, **characterized in that** the cylindrical lifter (412) is returned by a spring which tends to move it away from the ball (401, 402).

4. Ball-lift device for adjusting the compression ratio for a variable compression ratio engine according to Claim 1, **characterized in that** the cylindrical lifter (412) is stopped in translation by a lifter abutment, said abutment being placed in a direction which is opposite to that allowing said cylindrical lifter (412) to lift the ball (401, 402).

5. Ball-lift device for adjusting the compression ratio for a variable compression ratio engine according to Claim 4, **characterized in that** the distance between the lifter abutment and the ball (401, 402) can be adjusted by means of a ball-clearance adjustment device so as to make it possible to adjust the clearance between the cylindrical lifter (412) and said ball (401, 402) when said cylindrical lifter (412) is in contact with said lifter abutment.

6. Ball-lift device for adjusting the compression ratio for a variable compression ratio engine according to Claim 5, **characterized in that** the device for adjusting the ball clearance consists of a thread created directly or indirectly in the crankcase (100) of the variable compression ratio engine and making it possible to adjust the position of the lifter abutment relative to that of the seat (403, 404) of the ball (401, 402), said thread being able to be stopped from rotating by locking means.

7. Ball-lift device for adjusting the compression ratio for a variable compression ratio engine according to Claim 1, **characterized in that** the electromechanical actuator (413) is housed outside the transfer channel (405).

8. Ball-lift device for adjusting the compression ratio for a variable compression ratio engine according to Claim 1, **characterized in that** the electromechanical actuator (413) consists of at least one electromagnetic suction cup comprising a winding and a cage attached directly or indirectly to the crankcase (100) of the variable compression ratio engine, said winding being used to create a magnetic field making it possible to attract a metal lifter armature pushing the cylindrical lifter (412) when said winding is traversed by an electric current.

9. Ball-lift device for adjusting the compression ratio for a variable compression ratio engine according to Claim 1, **characterized in that** the first electromagnetic suction cup (414) of the electromechanical actuator (413) consists of a winding (416) and a metal cage (418) that can be attached to a metal supporting armature (421), said metal supporting armature (421) being able to move toward the ball (401, 402) but being stopped in the opposite direction by a second suction cup adjustment device (422, 424) secured directly or indirectly to the crankcase (100) of the variable compression ratio engine.

10. Ball-lift device for adjusting the compression ratio for a variable compression ratio engine according to Claim 1, **characterized in that** the second electromagnetic suction cup (415) of the electromechanical actuator (413) consists of a winding (417) and a metal cage (419) attached directly or indirectly to the crankcase (100) of the variable compression ratio engine, said winding (417) being used to create a magnetic field so as to attract the metal supporting armature (421) of the first electromagnetic suction cup (414) when said winding (417) of said second electromagnetic suction cup (415) is traversed by an electric current.

11. Ball-lift device for adjusting the compression ratio for a variable compression ratio engine according to Claim 1, **characterized in that** the maximum distance between a metal lifter armature (420) secured to or in contact with the cylindrical lifter (412) on the one hand and the metal cage (418) of the first electromagnetic suction cup (414) on the other hand can be adjusted by means of a first suction cup adjustment device (423, 430) so as to adjust the small lift height of the ball (401, 402).

12. Ball-lift device for adjusting the compression ratio for a variable compression ratio engine according to Claim 11, **characterized in that** the first electromagnetic suction cup adjustment device consists of a thread (430) making it possible to adjust the position of the abutment (423) secured directly or indirectly to the crankcase (100) of the variable compression ratio engine and on which the metal lifter armature (420) rests relative to the position of the metal cage (418), said thread (430) being able to be stopped from rotating by locking means (431).

13. Ball-lift device for adjusting the compression ratio for a variable compression ratio engine according to Claim 11, **characterized in that** the maximum distance between the metal supporting armature (421) of the first electromagnetic suction cup (414) and the metal cage (419) of the second electromagnetic suction cup (415) can be adjusted by means of a second suction cup adjustment device (422, 424) so as to adjust the large lift height of the ball (401, 402).

14. Ball-lift device for adjusting the compression ratio for a variable compression ratio engine according to Claim 13, **characterized in that** the second suction cup adjustment device consists of a thread (424) making it possible to adjust the position of the abutment (422) of the metal supporting armature (421) relative to the position of the metal cage (419) of the second electromagnetic suction cup (415), said thread (424) being able to be stopped rotating by locking means (425).

15. Ball-lift device for adjusting the compression ratio for a variable compression ratio engine according to Claim 1, **characterized in that** the actuator piston (13) of the hydraulic double-acting control actuator (8) comprises two elastic end-of-stroke abutments (130, 131) which determine the maximum stroke of said piston, the first elastic abutment (131) making it possible to limit the maximum compression ratio of the variable compression ratio engine when it comes into contact with the crankcase (100) of said engine, the second elastic abutment (130) making it possible to limit the minimum compression ratio of the variable compression ratio engine when it comes into contact with a cylinder head (300) of the control actuator (8) of said engine.

16. Ball-lift device for adjusting the compression ratio for a variable compression ratio engine according to Claim 15, **characterized in that** the actuator piston (13) of the hydraulic double-acting control actuator (8) attached to the control rack (7) comprises, between the lower face of said piston (13) and the lower actuator rod (16) of the control rack (7), an adjustment washer (135) which makes it possible to adjust the position of said piston relative to said rack, so as to be able to adjust the compression ratio of the variable compression ratio engine when one or the other of the two elastic end-of-stroke abutments (130, 131) comes into contact either with the crankcase (100) of said engine, this being the first abutment (131), or with the cylinder head (300) of the control actuator (8) of said engine, this being the second abutment (130).

17. Ball-lift device for adjusting the compression ratio for a variable compression ratio engine according to Claim 1, **characterized in that** the actuator piston (13) comprises a piston depressurizing duct (133) which connects the lower chamber (122) and the upper chamber (121) of the hydraulic double-acting control actuator (8), said duct allowing the air that can form a pocket in said lower chamber (122) to pass into said upper chamber (121).

18. Ball-lift device for adjusting the compression ratio for a variable compression ratio engine according to Claim 17, **characterized in that** the piston depressurizing duct (133) consists of a space left between the actuator piston (13) and the lock screw (132) calculated to form a pressure loss limiting the flow rate of hydraulic fluid between the lower chamber (122) and the upper chamber (121) of the hydraulic double-acting control actuator (8).

19. Ball-lift device for adjusting the compression ratio for a variable compression ratio engine according to Claim 17, **characterized in that** the piston depressurizing duct (133) of the actuator piston (13) comprises a considerable space left between the actuator piston (13) and the lock screw (132), said space allowing the hydraulic fluid to pass from the lower chamber (122) to the upper chamber (121) of the hydraulic double-acting control actuator (8), via a groove formed on the lower face of a depressurizing washer (136) clamped between said lock screw (132) and said actuator piston (13).

20. Ball-lift device for adjusting the compression ratio for a variable compression ratio engine according to Claim 19, **characterized in that** the groove that the depressurizing washer (136) comprises is in spiral form in order to have a great length, the beginning of said spiral leading into the central hole of said washer, while the end of said spiral leads into the periphery of said washer.

21. Ball-lift device for adjusting the compression ratio for a variable compression ratio engine according to Claim 17, **characterized in that** the piston depressurizing duct (133) consists of a depressurizing capillary duct (134) formed or fitted in the body of the lock screw (132) making it possible to attach the actuator piston (13) to the control rack (7), the profile, the cross section and the length of said capillary duct (134) being calculated to form a pressure loss limiting the passage of the hydraulic fluid between the lower chamber (122) and the upper chamber (121) of the control actuator (8).

22. Ball-lift device for adjusting the compression ratio for a variable compression ratio engine according to Claim 1, **characterized in that** the hydraulic double-acting control actuator (8) comprises an actuator depressurizing duct (137) the inlet of which is positioned at the highest point of the upper chamber (121) and the outlet of which opens into any point of the variable compression ratio engine, said actuator depressurizing duct (137) being able to be closed off or opened by means of a depressurizing solenoid valve (138).

23. Ball-lift device for adjusting the compression ratio for a variable compression ratio engine according to Claim 1, **characterized in that** it comprises a position sensor (95) which makes it possible to measure the vertical position of the control rack (7) of the variable compression ratio engine.

24. Ball-lift device for adjusting the compression ratio for a variable compression ratio engine according to Claim 1, **characterized in that** it comprises a passage detection sensor which makes it possible to measure the moment of passage of a piston rack (3) of the variable compression ratio engine.

25. Ball-lift device for adjusting the compression ratio for a variable compression ratio engine according to Claim 1, **characterized in that** it comprises a pressure sensor which makes it possible to measure the pressure that prevails in the upper chamber (121) of the control actuator (8) of the variable compression ratio engine.

26. Ball-lift device for adjusting the compression ratio for a variable compression ratio engine according to Claim 1, **characterized in that** it comprises a pressure sensor which makes it possible to measure the pressure that prevails in a combustion chamber that the variable compression ratio engine comprises.

27. Ball-lift device for adjusting the compression ratio for a variable compression ratio engine according to Claim 1, **characterized in that** it comprises an angular sensor (93) which makes it possible to measure the angular position of a crankshaft (9) that the variable compression ratio engine comprises.

28. Ball-lift device for adjusting the compression ratio for a variable compression ratio engine according to Claim 1, **characterized in that** the upper chamber (121) of the control actuator (8) comprises a resupply nonreturn valve element (428), said valve element allowing the pressurized hydraulic fluid from the hydraulic power unit (200) of the variable compression ratio engine to enter said upper chamber (121), but not to leave it.

29. Ball-lift device for adjusting the compression ratio for a variable compression ratio engine according to Claim 1, **characterized in that** the lower chamber (122) of the control actuator (8) comprises a resupply nonreturn valve element (429), said valve element allowing the pressurized hydraulic fluid from the hydraulic power unit (200) of the variable compression ratio engine to enter said lower chamber (122), but not to leave it.

30. Ball-lift device for adjusting the compression ratio for a variable compression ratio engine according to Claim 1, **characterized in that** it comprises a plate (460) fitted to the crankcase (100) of the variable compression ratio engine in which the transfer channel (405) is formed, said plate comprising the means (410) for lifting the balls (401, 402) and sealing means providing the seal between said transfer channel (405) and ducts (406, 407) integrated into the crankcase (100).

31. Ball-lift device for adjusting the compression ratio for a variable compression ratio engine according to Claim 1, **characterized in that** the first electromagnetic suction cup (432) and the second electromagnetic suction cup (433) are securely attached to the crankcase (100) of the variable compression ratio engine, said first suction cup (432) being able to attract a free small-lift armature (438) coming into contact with the cylindrical lifter (412), while the second electromagnetic suction cup (433) makes it possible to attract a large-lift armature (434) secured to said lifter.

32. Ball-lift device for adjusting the compression ratio for a variable compression ratio engine according to Claim 31, **characterized in that** the small-lift electromagnetic suction cup (432) and large-lift electromagnetic suction cup (433) are secured to the crankcase (100) by a cylindrical sheath (435) in which they are housed, said sheath (435) being screwed into said crankcase (100).

33. Ball-lift device for adjusting the compression ratio for a variable compression ratio engine according to Claim 31, **characterized in that** the free small-lift armature (438) comprises a return spring (436).

34. Ball-lift device for adjusting the compression ratio for a variable compression ratio engine according to Claim 31, **characterized in that** the large-lift armature (434) secured to the cylindrical lifter (412) comprises a return spring (437).

35. Ball-lift device for adjusting the compression ratio for a variable compression ratio engine according to Claim 31, **characterized in that** the small-lift electromagnetic suction cup (432) comprises adjustment means making it possible to adjust the height of the small lift of the cylindrical lifter (412).

36. Ball-lift device for adjusting the compression ratio for a variable compression ratio engine according to Claim 31, **characterized in that** the large-lift electromagnetic suction cup (433) comprises adjustment means making it possible to adjust the height of the large lift of the cylindrical lifter (412).

37. Ball-lift device for adjusting the compression ratio for a variable compression ratio engine according to Claim 32, **characterized in that** the cylindrical sheath (435) comprises adjustment means making it possible to adjust the distance between the cylindrical lifter (412) and the ball (401, 402) when none of the electromagnetic suction cups (432, 433) is supplied with electric current.

38. Ball-lift device for adjusting the compression ratio for a variable compression ratio engine according to Claim 1, **characterized in that**, for each of the balls (401, 402), it comprises:
• complementary closing means (600) which consist of a needle (601) that can rest on a seat (602), said needle (601) being able to close off a connecting channel (604) originating from one or the other of the chambers, the upper chamber (121) or lower chamber (122), leading into the transfer channel (405) connecting said upper chamber (121) and lower chamber (122) of the hydraulic double-acting control actuator (8),
• and pulling means (610) making it possible to pull the needle (601) from its seat (602) in order to allow the hydraulic fluid to pass in both directions.

39. Ball-lift device for adjusting the compression ratio for a variable compression ratio engine according to Claim 38, **characterized in that** the connecting channel (604) may comprise a calibrated hole (603) making it possible to control the flow rate of oil passing through it and to ensure a better control of the flow rate.

40. Ball-lift device for adjusting the compression ratio for a variable compression ratio engine according to Claim 38, **characterized in that** the pulling means (610) consist of an electromechanical actuator (613) making it possible to move the needle (601) in longitudinal translation so that one of its ends comes away from its seat (602) in order to allow the hydraulic fluid to pass in both directions.

41. Ball-lift device for adjusting the compression ratio for a variable compression ratio engine according to Claim 40, **characterized in that** the electromechanical actuator (613) consists, on the inside of a cylindrical body (650), of an electromagnetic suction cup (614) comprising a winding (615) and a cage (616) attached to the inside of said cylindrical body (650), said winding (615) of said suction cup (614) being used to create a magnetic field making it possible to attract a metal armature (617) secured to the needle (601) and making it possible to pull said needle (601) when said winding (615) is traversed by an electric current.

## Patentansprüche

1. Vorrichtung zur Einstellung des Verdichtungsverhältnisses eines Motors mit variablem Verdichtungsverhältnis, der einen doppeltwirkenden hydraulischen Steuerzylinder (8) enthält, welcher eine obere Kammer (121) und eine untere Kammer (122) und mindestens einen Zylinderkolben (13) aufweist, der durch eine Spannschraube (132) an einer Steuerzahnstange (7) befestigt ist, **dadurch gekennzeichnet, dass** sie enthält:
• mindestens zwei Kugeln (401, 402) oder Ventile, die je auf einem Sitz (403, 404) aufliegen und das eine bzw. das andere Ende eines Übertragungskanals (405) verschließen, der die obere Kammer (121) und die untere Kammer (122) des Steuerzylinders (8) verbindet, wobei die Kugeln (401, 402) wie ein Rückschlagventil wirken, wenn sie von einer Feder (408, 409) auf ihrem Sitz (403, 404) gehalten werden, um das Hydraulikfluid nur in einer Richtung durchzulassen;
• und Anhebeeinrichtungen (410), die es ermöglichen, die Kugeln (401, 402) von ihrem Sitz (403, 404) abzuheben, damit die Kugeln das Hydraulikfluid in beiden Richtungen durchlassen, wobei die Anhebeeinrichtungen (410) aus einem zylindrischen Schieber (412), der im Übertragungskanal (405) untergebracht ist, und aus einem elektromechanischen Stellantrieb (413) bestehen, der es ermöglicht, den zylindrischen Schieber (412) in Längstranslation zu betätigen, damit sein Ende mit der Kugel (401, 402) in Kontakt kommt und sie so schiebt, dass sie von ihrem Sitz (403, 404) abhebt, wobei der elektromechanische Stellantrieb (413) einen ersten elektromagnetischen Sauger (414, 432), der es ermöglicht, die Kugel (401, 402) über eine geringe Höhe anzuheben, und einen zweiten elektromagnetischen Sauger (415, 433) aufweist, der es ermöglicht, die Kugel (401, 402) über eine größere Höhe anzuheben.

2. Vorrichtung zur Einstellung des Verdichtungsverhältnisses mit Kugelhub für einen Motor mit variablem Verdichtungsverhältnis nach Anspruch 1, **dadurch gekennzeichnet, dass** sie mindestens ein Kompensations-Rückschlagventil (411) aufweist, das es dem Hydraulikfluid ermöglicht, aus dem Übertragungskanal (405) auszutreten, um in eine Hydraulikzentrale (200) des Motors mit variablem Verdichtungsverhältnis zurückzukehren, die eine unter Druck stehende Reserve (251) des Fluids enthält, aber die Rückkehr des Fluids in den Übertragungskanal verhindert.

3. Vorrichtung zur Einstellung des Verdichtungsverhältnisses mit Kugelhub für einen Motor mit variablem Verdichtungsverhältnis nach Anspruch 2, **dadurch gekennzeichnet, dass** der zylindrische Schieber (412) von einer Feder zurückgestellt wird, die dahin tendiert, ihn von der Kugel (401, 402) zu entfernen.

4. Vorrichtung zur Einstellung des Verdichtungsverhältnisses mit Kugelhub für einen Motor mit variablem Verdichtungsverhältnis nach Anspruch 1, **dadurch gekennzeichnet, dass** der zylindrische Schieber (412) in der Translationsbewegung von einem Schieberanschlag angehalten wird, wobei der Anschlag in einer Richtung angeordnet ist, die derjenigen entgegengesetzt ist, die es dem zylindrischen Schieber (412) erlaubt, die Kugel (401, 402) anzuheben.

5. Vorrichtung zur Einstellung des Verdichtungsverhältnisses mit Kugelhub für einen Motor mit variablem Verdichtungsverhältnis nach Anspruch 4, **dadurch gekennzeichnet, dass** der Abstand zwischen dem Schieberanschlag und der Kugel (401, 402) mittels einer Einstellvorrichtung des Abstands zur Kugel einstellbar ist, um es zu ermöglichen, das Spiel zwischen dem zylindrischen Schieber (412) und der Kugel (401, 402) einzustellen, wenn der zylindrische Schieber (412) mit dem Schieberanschlag in Kontakt ist.

6. Vorrichtung zur Einstellung des Verdichtungsverhältnisses mit Kugelhub für einen Motor mit variablem Verdichtungsverhältnis nach Anspruch 5, **dadurch gekennzeichnet, dass** die Einstellvorrichtung des Abstands zur Kugel aus einem Gewinde besteht, das direkt oder indirekt im Zylindergehäuse (100) des Motors mit variablem Verdichtungsverhältnis angeordnet ist und es ermöglicht, die Stellung des Schieberanschlags bezüglich derjenigen des Sitzes (403, 404) der Kugel (401, 402) einzustellen, wobei das Gewinde von Blockiereinrichtungen in Drehung angehalten werden kann.

7. Vorrichtung zur Einstellung des Verdichtungsverhältnisses mit Kugelhub für einen Motor mit variablem Verdichtungsverhältnis nach Anspruch 1, **dadurch gekennzeichnet, dass** der elektromechanische Stellantrieb (413) außerhalb des Übertragungskanals (405) untergebracht ist.

8. Vorrichtung zur Einstellung des Verdichtungsverhältnisses mit Kugelhub für einen Motor mit variablem Verdichtungsverhältnis nach Anspruch 1, **dadurch gekennzeichnet, dass** der elektromechanische Stellantrieb (413) aus mindestens einem elektromagnetischen Sauger besteht, der eine Wicklung und einen Käfig aufweist, der direkt oder indirekt auf dem Zylindergehäuse (100) des Motors mit variablem Verdichtungsverhältnis befestigt ist, wobei die Wicklung dazu dient, ein Magnetfeld zu erzeugen, das es ermöglicht, eine metallische Schieberplatte anzuziehen, die den zylindrischen Schieber (412) schiebt, wenn die Wicklung von einem elektrischen Strom durchquert wird.

9. Vorrichtung zur Einstellung des Verdichtungsverhältnisses mit Kugelhub für einen Motor mit variablem Verdichtungsverhältnis nach Anspruch 1, **dadurch gekennzeichnet, dass** der erste elektromagnetische Sauger (414) des elektromechanischen Stellantriebs (413) aus einer Wicklung (416) und einem Metallkäfig (418) besteht, der an einer metallischen Trägerplatte (421) befestigt sein kann, wobei die metallische Trägerplatte (421) sich in Richtung der Kugel (401, 402) verschieben kann, aber in der entgegengesetzten Richtung von einer Einstellvorrichtung des zweiten Saugers (422, 424) angehalten wird, die direkt oder indirekt fest mit dem Zylindergehäuse (100) des Motors mit variablem Verdichtungsverhältnis verbunden ist.

10. Vorrichtung zur Einstellung des Verdichtungsverhältnisses mit Kugelhub für einen Motor mit variablem Verdichtungsverhältnis nach Anspruch 1, **dadurch gekennzeichnet, dass** der zweite elektromagnetische Sauger (415) des elektromechanischen Stellantriebs (413) aus einer Wicklung (417) und aus einem Metallkäfig (419) besteht, der direkt oder indirekt am Zylindergehäuse (100) des Motors mit variablem Verdichtungsverhältnis befestigt ist, wobei die Wicklung (417) dazu dient, ein Magnetfeld zu erzeugen, um die metallische Trägerplatte (421) des ersten elektromagnetischen Saugers (414) anzuziehen, wenn die Wicklung (417) des zweiten elektromagnetischen Saugers (415) von einem elektrischen Strom durchquert wird.

11. Vorrichtung zur Einstellung des Verdichtungsverhältnisses mit Kugelhub für einen Motor mit variablem Verdichtungsverhältnis nach Anspruch 1, **dadurch gekennzeichnet, dass** der maximale Abstand zwischen einer metallischen Schieberplatte (420), die mit dem zylindrischen Schieber (412) fest verbunden oder in Kontakt ist, einerseits, und dem Metallkäfig (418) des ersten elektromagnetischen Saugers (414) andererseits mittels einer Einstellvorrichtung des ersten Saugers (423, 430) eingestellt werden kann, um die geringe Hubhöhe der Kugel (401, 402) einzustellen.

12. Vorrichtung zur Einstellung des Verdichtungsverhältnisses mit Kugelhub für einen Motor mit variablem Verdichtungsverhältnis nach Anspruch 11, **dadurch gekennzeichnet, dass** die Einstellvorrichtung des ersten elektromagnetischen Saugers aus einem Gewinde (430) besteht, das es ermöglicht, die Position des Anschlags (423), der direkt oder indirekt fest mit dem Zylindergehäuse (100) des Motors mit variablem Verdichtungsverhältnis verbunden ist und auf dem die metallische Schieberplatte (420) aufliegt, bezüglich der Position des Metallkäfigs (418) einzustellen, wobei das Gewinde (430) durch Blockiereinrichtungen (431) in Drehung angehalten werden kann.

13. Vorrichtung zur Einstellung des Verdichtungsverhältnisses mit Kugelhub für einen Motor mit variablem Verdichtungsverhältnis nach Anspruch 11, **dadurch gekennzeichnet, dass** der maximale Abstand zwischen der metallischen Trägerplatte (421) des ersten elektromagnetischen Saugers (414) und dem Metallkäfig (419) des zweiten elektromagnetischen Saugers (415) mittels einer Einstellvorrichtung des zweiten Saugers (422, 424) eingestellt werden kann, um die große Hubhöhe der Kugel (401, 402) einzustellen.

14. Vorrichtung zur Einstellung des Verdichtungsverhältnisses mit Kugelhub für einen Motor mit variablem Verdichtungsverhältnis nach Anspruch 13, **dadurch gekennzeichnet, dass** die Einstellvorrichtung des zweiten Saugers aus einem Gewinde (424) besteht, das es ermöglicht, die Position des Anschlags (422) der metallischen Trägerplatte (421) bezüglich der Position des Metallkäfigs (419) des zweiten elektromagnetischen Saugers (415) einzustellen, wobei das Gewinde (424) durch Blockiereinrichtungen (425) in Drehung angehalten werden kann.

15. Vorrichtung zur Einstellung des Verdichtungsverhältnisses mit Kugelhub für einen Motor mit variablem Verdichtungsverhältnis nach Anspruch 1, **dadurch gekennzeichnet, dass** der Zylinderkolben (13) des doppeltwirkenden hydraulischen Steuerzylinders (8) zwei elastische Hubende-Anschläge (130, 131) aufweist, die den maximalen Hub des Kolbens bestimmen, wobei der erste elastische Anschlag (131) es ermöglicht, das maximale Verdichtungsverhältnis des Motors mit variablem Verdichtungsverhältnis zu begrenzen, wenn er mit dem Zylindergehäuse (100) des Motors in Kontakt kommt, wobei der zweite elastische Anschlag (130) es ermöglicht, das minimale Verdichtungsverhältnis des Motors mit variablem Verdichtungsverhältnis zu begrenzen, wenn er mit einem Zylinderkopf (300) des Steuerzylinders (8) des Motors in Kontakt kommt.

16. Vorrichtung zur Einstellung des Verdichtungsverhältnisses mit Kugelhub für einen Motor mit variablem Verdichtungsverhältnis nach Anspruch 15, **dadurch gekennzeichnet, dass** der an der Steuerzahnstange (7) befestigte Zylinderkolben (13) des doppeltwirkenden hydraulischen Steuerzylinders (8) zwischen der Unterseite des Kolbens (13) und der unteren Zylinderstange (16) der Steuerzahnstange (7) eine Einstellscheibe (135) aufweist, die es ermöglicht die Position des Kolbens bezüglich der Zahnstange einzustellen, um das Verdichtungsverhältnis des Motors mit variablem Verdichtungsverhältnis einstellen zu können, wenn der eine oder der andere der zwei elastischen Hubende-Anschläge (130, 131) entweder mit dem Zylindergehäuse (100) des Motors, wenn es sich um den ersten Anschlag (131) handelt, oder mit dem Zylinderkopf (300) des Steuerzylinders (8) des Motors in Kontakt kommt, wenn es sich um den zweiten Anschlag (130) handelt.

17. Vorrichtung zur Einstellung des Verdichtungsverhältnisses mit Kugelhub für einen Motor mit variablem Verdichtungsverhältnis nach Anspruch 1, **dadurch gekennzeichnet, dass** der Zylinderkolben (13) einen Kolben-Entgasungskanal (133) aufweist, der die untere Kammer (122) und die obere Kammer (121) des doppeltwirkenden hydraulischen Steuerzylinders (8) verbindet, wobei der Kanal es der Luft, die eine Tasche in der unteren Kammer (122) bilden kann, ermöglicht, in die obere Kammer (121) überzugehen.

18. Vorrichtung zur Einstellung des Verdichtungsverhältnisses mit Kugelhub für einen Motor mit variablem Verdichtungsverhältnis nach Anspruch 17, **dadurch gekennzeichnet, dass** der Kolben-Entgasungskanal (133) aus einem Raum besteht, der zwischen dem Zylinderkolben (13) und der Spannschraube (132) freigelassen wird und berechnet ist, um einen Druckverlust zu bilden, der den Durchsatz von Hydraulikfluid zwischen der unteren Kammer (122) und der oberen Kammer (121) des doppeltwirkenden hydraulischen Steuerzylinders (8) begrenzt.

19. Vorrichtung zur Einstellung des Verdichtungsverhältnisses mit Kugelhub für einen Motor mit variablem Verdichtungsverhältnis nach Anspruch 17, **dadurch gekennzeichnet, dass** der Kolben-Entgasungskanal (133) des Zylinderkolbens (13) einen großen Raum enthält, der zwischen dem Zylinderkolben (13) und der Spannschraube (132) freigelassen wird, wobei der Raum das Hydraulikfluid von der unteren Kammer (122) zur oberen Kammer (121) des doppeltwirkenden hydraulischer Steuerzylinders (8) über eine Rille übergehen lässt, die an der Unterseite einer Entgasungsscheibe (136) eingerichtet ist, die zwischen der Spannschraube (132) und dem Zylinderkolben (13) eingespannt ist.

20. Vorrichtung zur Einstellung des Verdichtungsverhältnisses mit Kugelhub für einen Motor mit variablem Verdichtungsverhältnis nach Anspruch 19, **dadurch gekennzeichnet, dass** die Rille, die die Entgasungsscheibe (136) aufweist, spiralförmig ist, um eine große Länge zu haben, wobei der Beginn der Spirale in dem zentralen Loch der Scheibe mündet, während das Ende der Spirale am Umfang der Scheibe mündet.

21. Vorrichtung zur Einstellung des Verdichtungsverhältnisses mit Kugelhub für einen Motor mit variablem Verdichtungsverhältnis nach Anspruch 17, **dadurch gekennzeichnet, dass** der Kolben-Entgasungskanal (133) aus einem Entgasungs-Kapillarkanal (134) besteht, der im Körper der Spannschraube (132) eingerichtet oder angesetzt ist, die es ermöglicht, den Zylinderkolben (13) an der Steuerzahnstange (7) zu befestigen, wobei das Profil, der Querschnitt und die Länge des Kapillarkanals (134) berechnet sind, um einen Druckverlust zu bilden, der den Durchgang des Hydraulikfluids zwischen der unteren Kammer (122) und der oberen Kammer (121) des Steuerzylinders (8) begrenzt.

22. Vorrichtung zur Einstellung des Verdichtungsverhältnisses mit Kugelhub für einen Motor mit variablem Verdichtungsverhältnis nach Anspruch 1, **dadurch gekennzeichnet, dass** der doppeltwirkende hydraulische Steuerzylinder (8) einen Zylinder-Entgasungskanal (137) aufweist, dessen Eingang am höchsten Punkt der oberen Kammer (121) positioniert ist, und dessen Ausgang an einem beliebigen Punkt des Motors mit variablem Verdichtungsverhältnis mündet, wobei der Zylinder-Entgasungskanal (137) mittels eines Entgasungs-Elektroventils (138) verschlossen oder geöffnet werden kann.

23. Vorrichtung zur Einstellung des Verdichtungsverhältnisses mit Kugelhub für einen Motor mit variablem Verdichtungsverhältnis nach Anspruch 1, **dadurch gekennzeichnet, dass** sie einen Positionssensor (95) aufweist, der es ermöglicht, die senkrechte Position der Steuerzahnstange (7) des Motors mit variablem Verdichtungsverhältnis zu messen.

24. Vorrichtung zur Einstellung des Verdichtungsverhältnisses mit Kugelhub für einen Motor mit variablem Verdichtungsverhältnis nach Anspruch 1, **dadurch gekennzeichnet, dass** sie einen Durchgangserfassungssensor aufweist, der es ermöglicht, den Durchgangsmoment einer Kolbenzahnstange (3) des Motors mit variablem Verdichtungsverhältnis zu messen.

25. Vorrichtung zur Einstellung des Verdichtungsverhältnisses mit Kugelhub für einen Motor mit variablem Verdichtungsverhältnis nach Anspruch 1, **dadurch gekennzeichnet, dass** sie einen Drucksensor aufweist, der es ermöglicht, den Druck zu messen, der in der oberen Kammer (121) des Steuerzylinders (8) des Motors mit variablem Verdichtungsverhältnis herrscht.

26. Vorrichtung zur Einstellung des Verdichtungsverhältnisses mit Kugelhub für einen Motor mit variablem Verdichtungsverhältnis nach Anspruch 1, **dadurch gekennzeichnet, dass** sie einen Drucksensor aufweist, der es ermöglicht, den in einem Brennraum herrschenden Druck zu messen, den der Motor mit variablem Verdichtungsverhältnis aufweist.

27. Vorrichtung zur Einstellung des Verdichtungsverhältnisses mit Kugelhub für einen Motor mit variablem Verdichtungsverhältnis nach Anspruch 1, **dadurch gekennzeichnet, dass** sie einen Winkelsensor (93) aufweist, der es ermöglicht, die Winkelstellung einer Kurbelwelle (9) zu messen, die der Motor mit variablem Verdichtungsverhältnis aufweist.

28. Vorrichtung zur Einstellung des Verdichtungsverhältnisses mit Kugelhub für einen Motor mit variablem Verdichtungsverhältnis nach Anspruch 1, **dadurch gekennzeichnet, dass** die obere Kammer (121) des Steuerzylinders (8) ein Wiederauffüll-Rückschlagventil (428) aufweist, wobei das Ventil es dem von der Hydraulikzentrale (200) des Motors mit variablem Verdichtungsverhältnis kommenden, unter Druck stehenden Hydraulikfluid ermöglicht, in die obere Kammer (121) einzutreten, aber nicht, sie zu verlassen.

29. Vorrichtung zur Einstellung des Verdichtungsverhältnisses mit Kugelhub für einen Motor mit variablem Verdichtungsverhältnis nach Anspruch 1, **dadurch gekennzeichnet, dass** die untere Kammer (122) des Steuerzylinders (8) ein Wiederauffüll-Rückschlagventil (429) aufweist, wobei das Ventil es dem von der Hydraulikzentrale (200) des Motors mit variablem Verdichtungsverhältnis kommenden, unter Druck stehenden Hydraulikfluid ermöglicht, in die untere Kammer (122) einzutreten, aber nicht, sie zu verlassen.

30. Vorrichtung zur Einstellung des Verdichtungsverhältnisses mit Kugelhub für einen Motor mit variablem Verdichtungsverhältnis nach Anspruch 1, **dadurch gekennzeichnet, dass** sie eine auf das Zylindergehäuse (100) des Motors mit variablem Verdichtungsverhältnis aufgesetzte Platine (460) aufweist, in der der Übertragungskanal (405) ausgespart ist, wobei die Platine die Anhebeeinrichtungen (410) der Kugeln (401, 402) und Dichtungseinrichtungen aufweist, die die Dichtheit zwischen dem Übertragungskanal (405) und in das Zylindergehäuse (100) integrierten Kanälen (406, 407) gewährleisten.

31. Vorrichtung zur Einstellung des Verdichtungsverhältnisses mit Kugelhub für einen Motor mit variablem Verdichtungsverhältnis nach Anspruch 1, **dadurch gekennzeichnet, dass** der erste elektromagnetische Sauger (432) und der zweite elektromagnetische Sauger (433) fest mit dem Zylindergehäuse (100) des Motors mit variablem Verdichtungsverhältnis verbunden sind, wobei der erste Sauger (432) eine freie Platte geringen Hubs (438) anziehen kann, die mit dem zylindrischen Schieber (412) in Kontakt kommt, während der zweite elektromagnetische Sauger (433) es ermöglicht, eine Platte großen Hubs (434) anzuziehen, die fest mit dem Schieber verbunden ist.

32. Vorrichtung zur Einstellung des Verdichtungsverhältnisses mit Kugelhub für einen Motor mit variablem Verdichtungsverhältnis nach Anspruch 31, **dadurch gekennzeichnet, dass** die elektromagnetischen Sauger geringen Hubs (432) und großen Hubs (433) durch ein zylindrisches Mantelrohr (435), in dem sie untergebracht sind, fest mit dem Zylindergehäuse (100) verbunden werden, wobei das Mantelrohr (435) in das Gehäuse (100) geschraubt ist.

33. Vorrichtung zur Einstellung des Verdichtungsverhältnisses mit Kugelhub für einen Motor mit variablem Verdichtungsverhältnis nach Anspruch 31, **dadurch gekennzeichnet, dass** die freie Platte geringen Hubs (438) eine Rückstellfeder (436) aufweist.

34. Vorrichtung zur Einstellung des Verdichtungsverhältnisses mit Kugelhub für einen Motor mit variablem Verdichtungsverhältnis nach Anspruch 31, **dadurch gekennzeichnet, dass** die Platte großen Hubs (434), die fest mit dem zylindrischen Schieber (412) verbunden ist, eine Rückstellfeder (437) aufweist.

35. Vorrichtung zur Einstellung des Verdichtungsverhältnisses mit Kugelhub für einen Motor mit variablem Verdichtungsverhältnis nach Anspruch 31, **dadurch gekennzeichnet, dass** der elektromagnetische Sauger geringen Hubs (432) Einstelleinrichtungen aufweist, die es ermöglichen, die Höhe des geringen Hubs des zylindrischen Schiebers (412) einzustellen.

36. Vorrichtung zur Einstellung des Verdichtungsverhältnisses mit Kugelhub für einen Motor mit variablem Verdichtungsverhältnis nach Anspruch 31, **dadurch gekennzeichnet, dass** der elektromagnetische Sauger großen Hubs (433) Einstelleinrichtungen aufweist, die es ermöglichen, die Höhe des großen Hubs des zylindrischen Schiebers (412) einzustellen.

37. Vorrichtung zur Einstellung des Verdichtungsverhältnisses mit Kugelhub für einen Motor mit variablem Verdichtungsverhältnis nach Anspruch 32, **dadurch gekennzeichnet, dass** das zylindrische Mantelrohr (435) Einstelleinrichtungen aufweist, die es ermöglichen, den Abstand zwischen dem zylindrischen Schieber (412) und der Kugel (401, 402) einzustellen, wenn keiner der elektromagnetischen Sauger (432, 433) mit elektrischem Strom gespeist wird.

38. Vorrichtung zur Einstellung des Verdichtungsverhältnisses mit Kugelhub für einen Motor mit variablem Verdichtungsverhältnis nach Anspruch 1, **dadurch gekennzeichnet, dass** sie für jede der Kugeln (401, 402) enthält:
• komplementäre Verschlusseinrichtungen (600), die aus einer Ventilnadel (601) bestehen, die auf einem Sitz (602) ruhen kann, wobei die Ventilnadel (601) einen von der einen oder der anderen der oberen (121) oder unteren Kammer (122) kommenden Verbindungskanal (604) verschließen kann, der in den Übertragungskanal (405) mündet, der die obere (121) und untere Kammer (122) des doppeltwirkenden hydraulischen Steuerzylinders (8) verbindet,
• und Zieheinrichtungen (610), die es ermöglichen, die Ventilnadel (601) von ihrem Sitz (602) zu ziehen, um das Hydraulikfluid in beiden Richtungen durchzulassen.

39. Vorrichtung zur Einstellung des Verdichtungsverhältnisses mit Kugelhub für einen Motor mit variablem Verdichtungsverhältnis nach Anspruch 38, **dadurch gekennzeichnet, dass** der Verbindungskanal (604) ein kalibriertes Loch (603) aufweisen kann, das es ermöglicht, den ihn durchquerenden Öldurchsatz zu kontrollieren und eine bessere Beherrschung des Durchsatzes zu garantieren.

40. Vorrichtung zur Einstellung des Verdichtungsverhältnisses mit Kugelhub für einen Motor mit variablem Verdichtungsverhältnis nach Anspruch 38, **dadurch gekennzeichnet, dass** die Zieheinrichtungen (610) aus einem elektromechanischen Stellantrieb (613) bestehen, der es ermöglicht, die Ventilnadel (601) in Längstranslation zu betätigen, damit eines ihrer Enden sich von seinem Sitz (602) entfernt, um das Hydraulikfluid in beiden Richtungen durchzulassen.

41. Vorrichtung zur Einstellung des Verdichtungsverhältnisses mit Kugelhub für einen Motor mit variablem Verdichtungsverhältnis nach Anspruch 40, **dadurch gekennzeichnet, dass** der elektromechanische Stellantrieb (613) im Inneren eines zylindrischen Körpers (650) aus einem elektromagnetischen Sauger (614) besteht, der eine Wicklung (615) und einen Käfig (616) aufweist, der innerhalb des zylindrischen Körpers (650) befestigt ist, wobei die Wicklung (615) des Saugers (614) dazu dient, ein Magnetfeld zu erzeugen, das es ermöglicht, eine fest mit der Ventilnadel (601) verbundene Metallplatte (617) anzuziehen, und es ermöglicht, die Ventilnadel (601) zu ziehen, wenn die Wicklung (615) von einem elektrischen Strom durchquert wird.
